(19) Europäisches Patentamt
European Patent Office
Office européen des brevets

(11) EP 1 142 937 B1

(12) EUROPEAN PATENT SPECIFICATION

(45) Date of publication and mention of the grant of the patent:
**14.09.2005 Bulletin 2005/37**

(51) Int Cl.[7]: **C08J 5/18**, B32B 27/36 // C08L67:02

(21) Application number: **01108368.0**

(22) Date of filing: **03.04.2001**

# (54) Porous polyester film

Poröser Polyesterfilm

Film poreux de polyester

(84) Designated Contracting States:
**DE FR GB**

(30) Priority: **03.04.2000 JP 2000100888**
**01.06.2000 JP 2000164629**

(43) Date of publication of application:
**10.10.2001 Bulletin 2001/41**

(73) Proprietor: **Toyo Boseki Kabushiki Kaisha**
**Osaka 530-8230 (JP)**

(72) Inventors:
- **Nishi, Mutsuo**
**Tsuruga-shi, Fukui 914-0047 (JP)**
- **Ito, Katsuya**
**Otsu-shi, Shiga 520-0292 (JP)**
- **Yamada, Koji, c/o Toyo Boseki K.K. Head Office**
**Osaka-shi, Osaka 530-8230 (JP)**
- **Sasaki, Yasushi**
**Tsuruga-shi, Fukui 914-0047 (JP)**

(74) Representative: **Weber, Thomas et al**
**Patentanwälte**
**von Kreisler-Selting-Werner,**
**Bahnhofsvorplatz 1 (Deichmannhaus)**
**50667 Köln (DE)**

(56) References cited:
**EP-A- 0 496 323**
**EP-A- 0 672 536**
**EP-A- 0 884 347**
**EP-A- 1 008 619**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### TECHNICAL FIELD OF THE INVENTION

The present invention relates to the use of a porous polyester film. More particularly, the present invention relates to a film having high reflectivity to visible light as a display reflector.

### BACKGROUND OF THE INVENTION

With the sophistication, downsizing and lightweighting of information processing equipment, such as computer, word processor, cellular phone and the like, in recent years, a liquid crystal display has been gaining popularity as a display apparatus to take over the widely used Braun tubes and LED panels. The information processing equipment as mentioned above requires lightweight constituent parts to improve downsizability and portability. The same applies to liquid crystal displays, and various studies have been undertaken to achieve desired downsizing and lightweighting. In this current flow, polyester films are drawing much attention as a lightweight strong material showing high processability, that cannot be found in other materials such as glass and metal, and have been used as reflectors and diffusion plates for a backlight of liquid crystal panels.

A reflector for liquid crystal backlight improves the brightness of the display by reflecting the light forward that was introduced from the side by the action of a light leading plate. Therefore, a reflector is required to have a high reflectivity to visible light, and capability of providing a constant reflected light at any wavelength. To meet the demand, various techniques have been studied and tried.

It is a general practice to add and disperse a white pigment in a polyester film to impart the film with opacity, and therefore, reflectivity to visible light. With regard to this method, a number of studies have been made for utilization of polyester films as printing materials and display materials, wherein addition of various kinds of inorganic and organic white pigments, such as titanium dioxide, barium sulfate, calcium carbonate and the like, has been tried. At present, this technique has succeeded in obtaining films having a certain degree of reflectivity, and a film having such reflectivity has been actually used for the production of liquid crystal panels. However, there remain some unresolved problems.

One of the unresolved problems is the specific gravity of the film. The motivation to use a polyester film for a reflector is the need for downsizing and lightweighting, wherein a high reflectivity is expected to be achieved with a film which is as thin and light as possible. In most cases, the above-mentioned white pigment has a markedly high specific gravity as compared to the polyester. The use of a large amount of the pigment to increase reflectivity results in a higher specific gravity of the film itself. This will offset the lightweight achieved by the use of a polyester film for a reflector, which needs a resolution.

Another unresolved problem is the productivity and cost. In general, such pigment is more expensive than the resin constituting the film, making addition of such pigment costly. In addition, a film containing a white pigment tends to suffer from breakage during film forming and contamination of steps due to the pigment, thereby lowering the productivity. This is another factor to boost the price of the film, and constitutes another problem of the method involving addition of a pigment.

There is an attempt to afford reflectivity of a film without adding a white pigment but by forming minute voids in a film.

One of the representative methods for forming minute voids in a film is addition, to a polyester constituting the base of the film, of a thermoplastic resin incompatible with the polyester. This method has been studied from various aspects in an attempt to utilize polyester films as printing materials and display materials. The sole use or combined use of resins, such as polystyrene, polypropylene, polymethylpentene and the like, has been proposed (e.g., US-A-3,944,699, US-A-4,187,133, JP-B-54-29550, JP-A-8-143692 etc.). According to JP-A-8-143692, two kinds of polyolefin and polystyrene resins are added to a polyester resin to be a film substrate, to allow for fine dispersion of voids capable of preventing heat crease and heat curl, which in turn results in a highly improved void dispersibility above the conventional level. However, even the film obtained by this method contains voids dispersed only at an insufficient level for use as a reflector material, and fails to achieve the void density necessary for improving reflectivity to visible light. As the situation stands, a porous polyester film suitable for use for various reflectors has not been obtained yet.

It is therefore a primary object of the present invention to disperse the voids uniformly in a lightweight, highly strong polyester film having superior processability, thereby to improve its reflectivity to visible light, and to provide a porous polyester film suitable for use as a material for various reflectors.

A second object of the present invention is to disperse the voids uniformly in a lightweight, highly strong polyester film having superior processability, thereby to improve reflectivity to visible light and minimize the difference in its reflectivity between the both faces of the film as far as possible, and to provide a porous polyester film suitable as a material for various reflectors.

A porous film made from a synthetic resin as a main material can be lightweighted and can afford fine writability and clear printability and transcriptability by forming a multitude of independent voids inside the film. Thus, porous films have been actively used as a synthetic paper (paper substitute).

Of such porous films, a polyester porous film mainly comprising a polyester represented by polyethylene terephthalate (PET) shows both superior heat resistance and strength, and has been widely used for various recording materials (e.g., for thermal transfer recording), delivery slips, labels and the like.

The polyester porous films can be produced by adding to a polyester a thermoplastic resin incompatible with the polyester and biaxially oriented, as disclosed in US-A-3,944,699, US-A-4,187,133, JP-B-54-29550, US-A-5,672,409, JP-A-8-143692 and the like.

EP-A-0496323 discloses a reflector used in a surface light source comprising a white polyester film in which fine voids are formed and whose apparent specific gravity is in the range of 0.5 to 1.2. The reflectance of the polyester film can be increased by fine voids. However, the mean reflectance in the range of 400 to 700 nm is limited to a maximum of 97 %.

In addition, a porous polyester film having a laminate structure and exemplary application thereof as a substrate for thermal transfer recording material are disclosed in JP-B-6-96281, USP 6,096,684 and the like.

The sensitivity property in thermal transfer recording, such as gradation expression capability in sublimation transcription recording, is well known to improve further with improved cushioning property (in other words, greater porosity) of a porous film used as a substrate, but the handling property (resistance to crease etc.) of the film is also degraded.

It is an extremely difficult task to improve handling property (resistance to crease etc.) of a film while maintaining high porosity, and various attempts have been made to resolve this problem.

For example, polyethylene glycol or a derivative thereof is added to polyester to finely disperse polyolefin, which is a void-forming agent, thereby softening the film (JP-B-2952918), polystyrene and two kinds of polyolefins are mixed at a specific ratio and used as a void-forming agent (USP 6,096,684), high sensitivity is achieved by coextrusion while suppressing the porosity (cushioning property) of the entire film within the range affording sufficient handling property (USP 6,096,684) or other methods.

However, these methods have difficulty in achieving high handling property and high sensitivity of the film, and there is a demand on a film much superior in handling property and sensitivity property.

A third object of the present invention is to provide a porous polyester laminate film having superior property (printability, reproduction of whiteness, opacity etc.) of synthetic paper and improved handling property. Moreover, it is to provide a substrate film for thermal transfer recording material, which is highly superior in handling property and sensitivity property.

A fourth object is to provide a porous polyester film having low oligomer content, which has resistance to brittleness during a long-term use at a high temperature in a high pressure refrigerant gas, low dielectric property and superior handling property, and which is suitable as an insulating material for hermetic motors.

A fifth object is to suppress occurrence of burr during through-hole punching out particularly in a multi-layer laminating step of a ceramic sheet, and to provide a porous polyester release film showing superior punching out performance.

## SUMMARY OF THE INVENTION

Accordingly, an object of the present invention is the use of a porous polyester film comprising a fine porous layer (Layer A) comprising voids formed by dispersing in a polyester resin, a thermoplastic resin incompatible with said polyester, and drawing the film 2.8-4.0 times in the longitudinal direction and 3.2 - 4.2 times in the transverse direction, and having a ratio of the number of voids to film thickness of not less than 0.20 void/μm as obtained by dividing the number of voids in the thickness direction of the cross-section in the direction of orientation of the film by the film thickness, wherein the film has a spectral reflectance to a light having a wavelength of 450 nm of not less than 98 % as a display reflector. Further embodiments are evident from the dependent claims.

## BRIEF DESCRIPTION OF THE DRAWINGS

Fig. 1 shows a cut film wherein a broken line is a line along which the film is to be folded, wherein 1 is an insulating film and other numerals are in the unit of mm.

Fig. 2 shows the film of Fig. 1 folded along the broken line and bent to form a U-shape.

Fig. 3 shows a motor slot model, in which the film of Fig. 2 is to be inserted, wherein 4 is a part into which a film is inserted and other numerals are in the unit of mm.

## DETAILED DESCRIPTION OF THE INVENTION

As used herein, by the void ratio is meant a value (void/μm) obtained by dividing the [number of voids (number) in the thickness direction of the cross section in the direction of orientation of the film] by the [film thickness (μm)].

The porous polyester film used according to the present inventic has the above-mentioned constitution is lightweight, has high strength and is superior in processability. This polyester film shows fine dispersion state of the voids, is superior in reflectivity to visible light and is suitable as a material for various reflectors.

Particularly, the following porous polyester films are preferable for the use according to the present invention:

1) A film containing a thermoplastic resin incompatible with a polyester resin.
2) The film of 1), wherein the incompatible thermoplastic resin is a polystyrene resin.
3) The film of 1), wherein the incompatible thermoplastic resin is a polystyrene resin and a polyolefin resin.
4) The film of 3), wherein the polyolefin resin contains a polymethylpentene resin.
5) The film of 3), wherein a melt viscosity ηo of the polyolefin resin and a melt viscosity ηs of the polystyrene resin satisfy the following formula (I)

$$\eta_o/\eta_s \leqq 0.8 \qquad \text{(I)}$$

6) A film having an apparent specific gravity of 0.85 - 1.25.
7) A film having a white pigment particle content of not more than 5%.

As a different mode of the porous polyester film, as used according to the present invention there is mentioned a porous polyester laminate film comprising a porous layer (Layer A) made from a composition comprising a polyester resin and a thermoplastic resin incompatible with the polyester resin, and a polyester layer (Layer B) containing white inorganic fine particles in a proportion of 5 - 45 wt%, which is laminated on at least one surface of Layer A by coextrusion, wherein the film as a whole has an apparent specific gravity of 0.85 - 1.35, and Layer A has a void ratio (voids/μm) as expressed by the formula:

void number (voids) in the film thickness direction / film thickness (μm)
of not less than 0.20 void/μm.

Of those mentioned above, the following porous polyester laminate films are preferable.

8) A laminate film wherein a thermoplastic resin incompatible with a polyester resin in the aforementioned Layer A comprises a polyolefin and/or a polystyrene, and Layer A is substantially free of polyethylene glycol and a derivative thereof.
9) A laminate film wherein the thermoplastic resin incompatible with a polyester resin in the aforementioned Layer A comprises a polymethylpentene and a polystyrene and satisfies the following formulas (III) and (IV):

$$0.01 \leqq Ps/Po \leqq 1.0 \qquad \text{(III)}$$

$$2 \leqq Pt \leqq 15 \qquad \text{(IV)}$$

wherein Po and Ps are each a content (unit: wt%) of the polymethylpentene resin and the polystyrene resin relative to the weight of the film, and Pt is a content (unit: wt%) of the thermoplastic resins incompatible with a polyester resin relative to the film.

10) A laminate film wherein the white inorganic fine particles contained in Layer B is titanium oxide.
11) A laminate film having a coating layer comprising at least one resin component selected from a polyester and a polyurethane, which layer is formed on at least one surface of the porous polyester laminate film, and is oriented at least in the monoaxial direction.
12) A laminate film wherein the composition forming the aforementioned Layer A contains a self-recyclable starting material in a proportion of not less than 20 wt%.
13) A laminate film wherein the surface of Layer B shows a dynamic hardness of not more than 5.0 gf/$\mu m^2$ and has a glossiness of not less than 20%.

The porous polyester film used according to the present invention needs to have a void ratio (voids/μm)

expressed by the formula:

void number (voids) in the film thickness direction / film thickness (μm)

of not less than 0.20 void/μm, preferably not less than 0.25 void/μm, more preferably not less than 0.30 void/μm. When the void ratio fails to meet the requirement of the present invention, high reflectivity to visible light, which is the object of the present invention, cannot be achieved, or handling property cannot be improved. The upper limit is preferably 0.8 void/μm, more preferably 0.55 void/μm.

For use for a various reflector, the film has a reflectivity to an electromagnetic wave at wavelength 450 nm (namely, blue visible light) of preferably not less than 98%, more preferably not less than 100%, particularly preferably not less than 102%. The upper limit is not subject to any particular limitation, but when it is preferably 120%. When the reflectivity does not reach 98%, high reflectivity to visible light, which is the object of the present invention, may not be achieved.

The porous polyester film used according to the present invention preferably has an apparent specific gravity whose upper limit is 1.35, more preferably 1.25, and the lower limit is 0.70, more preferably 0.85.

When it is particularly used as a display reflector, the porous polyester film preferably has an apparent specific gravity of 0.70 - 1.25, more preferably 0.80 - 1.20, particularly preferable 0.85 - 1.15. When the apparent specific gravity is less than 0.70, the film tends to have a lower strength, which may lead to a problem of frequent occurrence of breakage in the orientation step during production, thereby lowering the productivity. When the apparent specific gravity exceeds 1.25, moreover, the amount of the voids is not sufficient, making the reflectivity to visible light insufficient.

When the film as a whole has an apparent specific gravity exceeding 1.35, the superior property of a porous polyester film cannot be achieved. Conversely, when the film as a whole has an apparent specific gravity of below 0.85, the flexibility characteristic of a biaxially oriented polyester film cannot be ensured, resulting in poor handling property (resistance to crease) of the film.

As the polyester, one obtained by polycondensation of an aromatic dicarboxylic acid such as terephthalic acid, isophthalic acid, naphthalenedicarboxylic acid etc. or a ester thereof, and glycol such as ethylene glycol, diethylene glycol, 1,3-propanediol, 1,4-butanediol, neopentyl glycol etc. can be used. These polyesters can be produced by directly esterifying aromatic dicarboxylic acid and glycol, followed by polycondensation, or ester interchange of alkyl ester of aromatic dicarboxylic acid and glycol, followed by polycondensation, or polycondensation of diglycol ester of aromatic dicarboxylic acid or other method.

Representative examples of the polyester include polyethylene terephthalate, polytrimethylene terephthalate, polybutylene terephthalate, polyethylene-2,6-naphthalate and the like. This polyester may be a homopolymer or a copolymerization product with a third component. In the present invention, it is preferable to use polyester containing ethylene terephthalate units, propylene terephthalate units, trimethylene terephthalate units, butylene terephthalate units or ethylene-2,6-naphthalate units in a proportion of not less than 70 mol%, preferably not less than 80 mol%, more preferably not less than 90 mol%. The above-mentioned polyester may be used alone or in combination.

The porous polyester film used according to the present invention contains voids in the film by dispersing, in a polyester resin, a thermoplastic resin incompatible with the polyester resin and subsequent orientation.

The thermoplastic resin incompatible with polyester resin is not subject to any limitation as long as it can form voids in the interface between the resin and polyester (a matrix polymer) in a biaxial orientation step of the film. Examples thereof include polyolefin resins such as polymethylpentene, polypropylene, polyethylene and the like, polystyrene resin, polyacrylic resin, polycarbonate resin, polysulfone resin, cellulosic resin, polyphenylene-ether resin and the like. These resins may be a homopolymer or a polymer having a copolymerizable component.

Of these thermoplastic resins, the use of polystyrene resin or a mixture of the polystyrene resin and a polyolefin resin is preferable. The polystyrene resin to be used is not necessarily limited to a homopolymer but may be a copolymer comprising various copolymerizable components. When a copolymer is used, it is essential that the copolymerized components do not prevent the effect of the present invention. The polyolefin resin to be used may be polyethylene, polypropylene, polybutene, polymethylpentene and the like. Of these, a polymethylpentene resin is preferable, because it does not soften easily even at high temperature and forms voids well. When a polymethylpentene resin is used as the main component of the polyolefin resin, other polyolefin resin may be added as a second component. Examples of the resin to be used as the second component include, but not particularly limited to, polyethylene, polypropylene and resins obtained by copolymerizing various components with these. A polyolefin resin to be added as a second component has a viscosity, which is not subject to any particular limitation. It is essential that the amount to be added does not exceed the amount of the resin to be added as the main component.

When a polyolefin resin and a polystyrene resin are concurrently used as the thermoplastic resin, the ratio ($\eta_o/\eta_s$) of a melt viscosity $\eta_o$ (poise) of the polyolefin resin to a melt viscosity $\eta_s$ (poise) of the polystyrene resin is preferably not less than 0.1 and not more than 0.8, more preferably not less than 0.2 and not more than 0.8, most preferably not less than 0.25 and not more than 0.5. When the above-mentioned ratio of melt viscosity is smaller than 0.1, the phase structure of the resin becomes instable, because the deformation of a polystyrene resin does not follow deformation of a polyolefin resin in a molten state. When the viscosity ratio exceeds 0.8, the distribution of the polystyrene resin becomes non-uniform, resulting in instable phase structure. In either case, the dispersion state of the thermoplastic resin incompatible with a polyester resin (hereinafter to be also referred to as void-forming agent) in the polyester resin constituting the film and is degraded, and the dispersion state of the voids as defined in the present invention cannot be met easily.

For an improved opacity of the film, inorganic or organic white pigment particles may be added as necessary. Examples of usable particles include, but not limited to, silica, kaolinite, talc, calcium carbonate, zeolite, alumina, barium sulfate, carbon black, zinc oxide, titanium oxide, zinc sulfide, organic white pigments and the like. These particles can be contained in a film by previously adding to a polyester resin and/or a thermoplastic resin incompatible with the polyester resin.

The content thereof particularly for a display plate reflector is preferably not more than 5 wt%, more preferably not more than 2 wt%, most preferably not more than 1 wt%, of the void film. When the white pigment particles are added over the amount defined here, the pigment particles block the reflection of light by the voids, and the reflectivity is markedly impaired, which is not preferable. It also causes an increase in the cost of the starting material, occurrence of breakage in the orientation step and the like.

For the improvement of the slip property of the above-mentioned porous polyester film and other objects, a layer of a polyester resin or a layer of a resin that adheres to a polyester resin may be laminated on one surface or both surfaces of the film by coextrusion. The resin to be laminated may contain a void-forming agent, which is of the same kind as the above-mentioned void-forming agent or otherwise. When a layer without voids is laminated, the ratio of thickness of this layer to the thickness of the entire film may be noticeably increased, which in turn naturally results in an undesirable decrease in the reflectivity.

The porous polyester film may have a coating layer on only one or both of the surfaces. By forming a coating layer, the adhesiveness and antistatic property can be improved. The compound constituting the coating layer is preferably a polyester resin. In addition, a typical compound capable of improving the adhesiveness and antistatic property of a polyester film, such as polyurethane resin, polyester-urethane resin, acrylic resin and the like can be used.

A coating layer is formed by a conventional method such as gravure coating, kiss coating, dipping, spray coating, curtain coating, air knife coating, blade coating, reverse roll coating and the like. Such layer can be formed before orientation of the film, after longitudinal orientation, after completion of orientation and the like.

The porous polyester film may have a thin metal layer only one or both of the surfaces. By forming a thin metal layer, the reflectivity can be further improved. A thin metal layer can be formed by a conventional method such as vapor deposition, sputtering and the like.

When a layer made from a polyester resin is laminated on one surface or both surfaces of the porous polyester film as used according the present invention by coextrusion, it is preferable that a polyester layer (Layer B) containing white inorganic fine particles in a proportion of 5 - 45 wt% is coextruded at least on one surface of the porous polyester film (Layer A) to give a porous polyester laminate film.

By coextrusion of Layer B, the opacity and whiteness of the film, and superior sensitivity of the film during thermal transfer recording can be achieved.

The aforementioned white inorganic particle may be, for example, anatase or rutile titanium oxide, barium sulfate, calcium carbonate and zinc sulfide, with most preference given to anatase or rutile titanium oxide. These particles are effective for imparting opacity to a film, as a result of which the film surface shows stable color tone irrespective of the variation in the color tone of Layer A, and the sensitivity during thermal transfer recording can be strikingly improved.

The more preferable content of the aforementioned white inorganic fine particle varies depending on the use.

Layer B may contain plural kinds of inorganic particles in combination, or an additive other than inorganic particles, for example fluorescent brightener, antistatic agent, UV absorbent, antioxidant and the like.

The method for making the dynamic hardness and glossiness of Layer B surface to fall within the range of the present invention is not subject to any particular limitation. For example, Layer B is made to have a white inorganic fine particle content of 5 - 45 wt% as mentioned above, and a specific longitudinal orientation method is employed in the orientation forming of the film to be mentioned later for this end. The specific method for the achievement is to be detailed in the description as regards the orientation forming.

Layer B may be laminated on one surface or both surfaces of Layer A. In the aforementioned general use, Layer B is preferably laminated in almost the same thickness (|difference between thickness of Layer B laminated on the surface of Layer A and thickness of Layer B laminated on the back| $\leqq$ 50% of average thickness of both layers B) on the both surfaces of Layer A. Moreover, for use as the aforementioned thermal transfer recording material, Layer B is preferably laminated only on one surface of Layer A.

The method for production of the porous polyester film of the present invention is optional and is not subject to any particular limitation. For example, the aforementioned composition is melted, extruded to give an unoriented film and the unoriented film is stretched.

For example, as one embodiment of the production method, a thermoplastic resin incompatible with a polyester resin is dispersed in the polyester resin during the step of melting and extruding the starting material. The polyester resin and the resin to be mixed therein may be processed as pellets but is not subject to any particular limitation. The starting material to be cast in an extruder to melt-form a film is mixed with these resins in the form of pellets, according to the composition of the objective film. Because the polyester resin and the polyolefin resin to be used in the present invention generally have greatly different specific gravity from each other, it is preferable that some step be taken to prevent the pellets once mixed from separating during supply to an extruder. For example, a part or the entirety of the starting material resins is preferably mixed and kneaded in advance to give the master batch pellets.

In the extrusion of a mixture of the polyester and the incompatible resin, moreover, the incompatible resin tends to reagglomerate even after mixing in a molten state and then finely dispersing, because it tries to decrease intersurface energy. This prevents expression of the desired properties, because it makes the void-forming agent crudely dispersed during extrusion of an unoriented film. To prevent this, a twin-screw extruder capable of providing a high kneading effect is preferably used to finely disperse the void-forming agent beforehand. If this is difficult, the resin to be discharged from an extruder is preferably passed through a static blender as an auxiliary means to allow for fine dispersion of the void-forming agent, after which it is fed to a feed block or die. The static blender used here may be a static mixer, an orifice and the like. when these methods are employed, however, a careful attention should be paid because a thermally degraded resin may dwell in the melt line. Since the re-agglomeration of the incompatible resin in a molten state is consider to proceed with time in a low shearing force state, this is resolved by shortening the dwelling time in the melt line from an extruder to a die. This time is preferably not more than 30 minutes, more preferably not more than 15 minutes.

The conditions, under which the unoriented film obtained above is subjected to orientation, are closely involved with the properties of the film. In the following, the orientation conditions are explained by referring to most preferable sequential biaxial orientation method, particularly a method comprising stretching an unoriented film in the longitudinal direction and then in the width direction. In the longitudinal orientation step, two or more rolls having different peripheral velocity are used for stretching. The heating means then may be a heating roller or non-contact heating method, or the two in concurrent use. Then, a monoaxially orientated film is introduced into a tenter and stretched 2.5 - 5 times in the width direction at a temperature of not more than $T_m$-10°C wherein $T_m$ is a melting point of polyester.

The obtained biaxially oriented film may be subjected to a heat treatment as necessary. The heat treatment is preferably conducted in a tenter, preferably in the range of ($T_m$-60°C) - $T_m$.

The porous polyester film thus obtained is suitable for use as a material of various reflectors because the fine voids dispersed in the polyester resin shows high reflectivity to visible light.

As a different embodiment of the production method, the following can be shown.

That is, (a) a polyester contained in Layer A and a specific resin used as a thermoplastic resin incompatible with the polyester are mixed at a specific mixing ratio and (b) a specific static blender is set at a specific site of the polymer melt line.

The thermoplastic resin incompatible with a polyester contained in Layer A preferably contains a polymethylpentene and a polystyrene, and satisfies the following formulas (II) and (III)

$$0.01 \leqq Ps/Po \leqq 1.0 \qquad (II)$$

$$2 \leqq Pt \leqq 15 \qquad (III)$$

wherein Po and Ps are each a content (unit: wt%) of polymethylpentene resin and polystyrene resin relative to the film as a whole, and Pt is a content (unit: wt%) of the thermoplastic resins incompatible with a polyester resin relative to the film as a whole.

Examples of the aforementioned polystyrene include atactic polystyrene, syndiotactic polystyrene, isotactic polystyrene, and those obtained by modifying these resins with maleic acid, acrylic acid and the like. Such polystyrene preferably has a melt viscosity $\eta_s$ of 100-1000 Pa·s (1,000 - 10,000 poise), particularly preferably 300-700 Pa·s (3,000 - 7,000 poise).

The aforementioned polymethylpentene may be a homopolymer, or that obtained by mixing or copolymerization (graft copolymerization, block copolymerization) of polymethylpentene as a main component and a different polyolefin as a second component, to the degree the properties are not impaired. The polyolefin usable as a second component include polyethylene, polypropylene and those obtained by copolymerization of these with various components. The amount of polyolefin as a second component preferably does not exceed the amount of polymethylpentene. This polymethylpentene preferably has a melt viscosity $\eta_{ms}$ of not more than 350 Pa·s (3,500 poise), particularly preferably not more than 200 Pa·s (2,000 poise).

The aforementioned formula (I) relates to a melt viscosity ratio (ηo/ηs) of polyolefin and polystyrene concurrently added to Layer A, and defines the preferable range. The more preferable range ηo/ηs is not more than 0.6, particularly preferably not more than 0.5. By setting the ηo/ηs to not more than 0.8, the synergistic effect with the static blender set in the melt line increases, thereby markedly improving the dispersibility, in a polyester resin, of a thermoplastic resin incompatible with the polyester resin, and makes it possible to set the density of the laminated voids of Layer A to not less than 0.20 void/μm.

When the ηm/ηs exceeds 0.8, the thermoplastic resin incompatible with a polyester resin is dispersed only insufficiently in the polyester resin, which in turn makes the density of the laminated voids within the range of the present invention unfeasible. The reason therefor is not clear, but it is postulated that, when ηo/ηs exceeds 0.8, polystyrene acts as a buffering agent to the shearing stress generated in the static blender in the melt line, while suppressing the progress of dispersion of polyolefin.

The aforementioned formula (II) relates to a weight ratio (Ps/Po) of polystyrene and polymethylpentene contents and defines the preferable range. The more preferable range of Ps/Po is 0.05 - 0.7, particularly preferably 0.1 - 0.5. When the Ps/Po is less than 0.01, meaning substantial absence of polystyrene, the dispersed polymethylpentene becomes remarkably rough. Conversely, when the Ps/Po exceeds 1.0, the void-forming capability expressed by the addition of a thermoplastic resin incompatible with a polyester resin becomes dramatically degraded.

In Layer A, a thermoplastic resin other than the aforementioned polystyrene and polymethylpentene can be concurrently used. The concurrent use of a particularly small amount of polypropylene is effective for an improved production stability of the film. In this case, polypropylene is preferably used concurrently within the range of the aforementioned formulas (I), (II) and (III). It is also preferable that a polypropylene content is not more than the polymethylpentene content.

The aforementioned formula (III) relates to the total content (Pt) of the entire thermoplastic resin incompatible with a polyester (inclusive of polystyrene, polymethylpentene, polypropylene and the like) contained in Layer A relative to the weight of the film as a whole and defines the preferable range. The more preferable range of Pt is 3 - 15 wt%, particularly preferably 5 - 10 wt%. When the Pt is less than 2 wt%, the amount of voids formed in the film becomes too small, which in turn makes the apparent specific gravity of the film as a whole not more than 1.35 unfeasible. Conversely, when Pt exceeds 15 wt%, the film as a whole has an apparent specific gravity of less than 0.85, which tends to degrade the handling property.

The static blender to be set in the polymer melt line maybe, for example, a static mixer, an orifice and the like.

The porous polyester film of the present invention can be obtained by orientation forming. The method of orientation forming may be any, such as the following.

First, a polyester resin and a thermoplastic resin incompatible with the polyester resin are preferably mixed preliminary in pellets and fed to an extruder. The pellets are stirred and mixed by natural stirring during air transport of the starting material, continuous stirring using an in-line mixer, mixing in a mixer for batch treatment or combination of these.

By preliminary mixing of the starting material pellets, the dead space can be reduced in the extruder screw to be used thereafter, thereby suppressing the degradation of the polymer in the melt line. Conversely, when the starting material is fed into an extruder without pellet-mixing, the composition of the starting material becomes inconsistent to cause partial dwelling of the molten polymer, which in turn may make the quality of the film inconsistent.

Then, the pellet-mixed starting material is fed into an extruder. The extruder may be a single-screw extruder, a twin-screw extruder and the like. For industrial production, a single-screw extruder is preferable in view of stable discharge capability. When a single-screw extruder is used, the shape of the screw may be any. However, a twin-screw extruder is preferably used in the present invention. A typical single-screw extruder is superior from the viewpoint of polymer discharge capability, but, for extrusion of a non-uniform pellet mixture, a twin-screw extruder is preferably used to eliminate the dead space and stabilize the film quality.

The polymer melt-mixed in an extruder is supplied to a coextrusion unit (feed block or multimanifold die) via a fixed amount supply apparatus and a filter.

In the present invention, to make the apparent specific gravity of the film as a whole and density of the laminated voids of Layer A within the range of the present invention, a molten polymer is preferably re-stirred in a static blender such as a static mixer orifice, and the like just before supply into the aforementioned coextrusion unit.

When the method is applied to an industrial production, it is necessary to provide a superior dispersion effect with the smallest possible pressure loss. In general, when a high shear force is applied to a molten polymer using an orifice, a superior dispersion effect is known to be obtained. However, a pressure loss grows in proportion to the effect, thus increasing the load on facility. According to the present invention, this problem is resolved by the use of a static mixer as a static blender, which has a propeller of 5 - 20 elements (more preferably 8 - 16 elements). As a result, a superior synergistic effect with the aforementioned starting material composition can be expressed while suppressing the increase of load on the facility (pressure loss of about 1 MPa - 5 MPa at most). This has a consequence that the apparent specific gravity of the film as a whole and the density of the laminated voids of Layer A can be made to fall within the range of the present invention.

The starting material of Layer B is fed into an extruder different from that for Layer A, and supplied to the aforementioned coextrusion unit (feed block or multimanifold die) via a fixed amount supply apparatus and a filter, and laminated on one surface or both surfaces of Layer A in the coextrusion unit.

The molten polymer thus laminated is extruded from a single flat die, and cast on a cooling drum to give an unoriented film. For casting on a cooling drum, static adhesion, air knife method and the like can be used.

The unoriented film produced by the aforementioned method is subjected to biaxial orientation and heat treatment. In the first longitudinal orientation step, the film is stretched between two or plural rolls having different roll speeds. In this step, heating is done by the use of a heating roll or by non-contact heating method, or the two in concurrent use.

For uniform expression of voids in the interface between the polyester and a thermoplastic resin incompatible therewith, it is preferable to use a heating roller to uniformly heat the unoriented film to a temperature not more than a second order transition temperature of the polyester, preferably 50 - 70°C, and then heated from one surface or both surfaces of the unoriented film with an infrared heater thereby to supply sufficient heat quantity necessary for uniform orientation and to initiate and complete the orientation instantaneously. The ratio of the longitudinal orientation is 2.8 - 4.0 times, more preferably 3.0 - 3.6 times.

For the expression of superior property of a substrate film for a thermal transfer recording material by control of the dynamic hardness of Layer B surface to not more than 5.0 gf/$\mu m^2$, the output of the infrared heater for the aforementioned longitudinal orientation is controlled separately on the surface and the back of the film. Specifically, when Layer B is laminated to one surface of Layer A, Layer B side of the film is heated at a lower temperature and stretched, and when Layer B is laminated on both surfaces of Layer A, the thermal transfer recording side is heated at a lower temperature and stretched.

The longitudinal monoaxially oriented film is introduced into a tenter where the film is stretched in the transverse direction. The preferable orientation temperature is 100 - 160°C, and stretching while heating for raising the temperature within this range is more preferable. The transverse orientation ratio is 3.2 - 4.2 times, more preferably 3.5 - 4.0 times.

The biaxially oriented film thus obtained is heat treated in a tenter. The heat treatment temperature is preferably 200 - 240°C, more preferably 210 - 230°C.

The dimensional stability of the film can be improved (decrease in thermal shrinkage) by heat relaxing treatment, which can be applied to the film longitudinal direction and/or width direction during the production of the film or after film production. The method of relaxation includes, for example, (a) a method wherein a clip is released or the end of the film is cut to allow relaxation in a tenter, (b) a method wherein the film is reheated during the period of from leaving the tenter to being wound up to allow relaxation, (c) a method wherein an annealing is applied in a separate step after winding up the film and the like.

In this case, the relaxation is applied preferably at a temperature of not less than 150°C and lower than the aforementioned heat treatment temperature, more preferably 160 - 190°C.

Use of the porous polyester laminate film of the present invention preferably shows a heat shrinkage (150°C $\times$ 30 min.) of less than 2.0%, more preferably less than 1.5%, still more preferably less than 1.0%, most preferably less than 0.5%.

The thickness of the porous polyester film used in the present invention is not subject to any particular limitation, but is preferably 15 - 500 μm, more preferably 40 - 250 μm, though subject to change depending on use.

The porous polyester laminate film can have any thickness, which is preferably 15 - 500 μm.

When the film is used as a reflector, the film preferably has a thickness of 50 - 350 μm for a reflector film and most preferably, 75 - 250 μm for a reflector film,

A porous polyester laminate film may also have a coating layer at least on one surface of thereof for improved wettability and adhesiveness of ink, coating agent and the like. The compound constituting the coating layer may be those recited in the above for the aforementioned porous polyester film, and the method for forming a coating layer is as mentioned above.

**Examples**

The present invention is explained in more detail in the following by referring to Examples and Comparative Examples that do not limit the present invention in any way. In addition, the methods for evaluating the properties as used in the present invention are shown in the following. In the Examples which follow (1 poise converts into 0.1 Pa·s.)

(1) Intrinsic viscosity of polyester resin

In a mixed solvent of phenol (60 wt%) and 1,1,2,2-tetrachloroethane (40 wt%) was dissolved a polyester starting material. Solids were filtered off with a glass filter and the viscosity was measured at 30°C.

(2) Melt viscosity of polyolefin resin and polystyrene resin (ηo, ηs)

Melt viscosity (resin temperature 285°C, shear rate 100/second) was measured using a flow tester (CFT-500, manufactured by Shimadzu Corporation). Due to the difficulty in fixing the shear rate at 100/second, the measurement of the melt viscosity at shear rate 100/second was conducted as follows. That is, using a suitable load, melt viscosity was measured at an optional shear rate smaller than 100/second and at an optional shear rate greater than this speed. The values obtained were plotted on a logarithmic graph with the melt viscosity in the longitudinal axis and the shear rate in the transverse axis. A straight line was drawn between the aforementioned two points, and the melt viscosity (η: poise) at shear rate 100/second was determined by interpolation.

(3) Apparent specific gravity of whole film

Measured by the sink float method in accordance with JIS K-7112.

(4) Void ratio

The cutting surface, which is in parallel to the direction of the longitudinal orientation of the film and vertical to the film surface, was observed with a scanning electron microscope at five different sites of a film sample. The above-mentioned cutting surface was observed at a suitable magnification of ×300 - 3,000 and microphotographed, so that the distribution of the voids in the film could be confirmed from the microphotography. Straight lines were drawn on the image in the microphotography randomly and vertically to the film surface, and the voids that came across the lines, N (number of voids), were counted. The thickness, T (μm), of the film was measured along the lines, and the number of voids, N (void), was divided by the thickness, T (μm), of the film to give the density of the voids, N/T (void/μm). The measurement was conducted at five sites per a microphotography, and the densities of the voids at 25 sites were averaged. The average was taken as the void density (void/μm) of the sample.

(5) Dynamic hardness of film surface

Using a dynamic ultra-microhardness tester (DUH-201, manufactured by Shimadzu Corporation) and applying a load of 0.2 gf to a conical indenter (115°), a dynamic hardness was calculated from the load and an insertion depth of the indenter, using the following equations:

$$DH = 37.838P/h^2$$

wherein DH is a dynamic hardness [Pa (gf/μm$^2$)], P is a test load (gf) and h is an insertion depth of indenter (μm).

(6) Surface glossiness

Using VGS-1001DP (manufactured by Nippon Denshoku Industries Co., Ltd.), 60° relative-secular glossiness was measured according to JIS Z 8741 (method 3).

(7) Heat transfer sensitivity (relative image density)

A coating solution having the following composition is applied to one surface of a film, so that the weight after drying can be 4 g/m$^2$, and the film is dimensionally fixed and heated at 160°C for 30 seconds to form a recording layer, whereby a heat transfer image-receiving sheet is prepared.

| | |
|---|---|
| Water dispersible copolymerized polyester resin | 2.0 parts by weight |
| Water dispersible acrylic-styrene copolymer | 5.0 parts by weight |
| Water dispersible isocyanate crosslinking agent | 0.5 part by weight |
| Water | 67.4 parts by weight |
| Isopropyl alcohol | 25.0 parts by weight |
| Surfactant | 0.1 part by weight |

A heat transfer image-receiving sheet thus obtained was cut into A6-sized samples, which were printed using a commercially available ink ribbon (printing set P-PS100 for sublimation transfer printer manufactured by Caravelle Data Systems Co., Ltd.) and a commercially available heat transfer printer (heat transfer label printer BLP-323 manufactured by Bon Electric Co., Ltd.) at a printing speed of 100 mm/sec and a head voltage of 18 V. The printing pattern consisted of 7 sets of 9 mm×9 mm squares (28 in all) painted all over in four colors of C (cyan), M (magenta), Y (yellow) and K (black, created by repeat printing of these three colors), which were arranged on an A6-sized sheet.

After printing, an optical reflection density of each color of C, M, Y and K was determined using a Macbeth densitometer (TR-927) and an average optical reflection density of the four colors (total 28) was determined.

In the same manner as above, an average optical reflection density was determined for a commercially available image-receiving paper (in P-PS100, having foamed polypropylene films (recording layers) laminated on both sides of natural paper). The heat transfer sensitivity was evaluated based on the proportion (%) of the average optical reflection density of the samples relative to the average optical reflection density of the commercially available image-receiving paper.

(8) Handling property

The film was cut into long strips having a length of 5 cm and a width of 1 cm, and drawn with a metal pin having a diameter of 1.4 mm. The creases and wrinkles produced on the film by the drawing were evaluated according to the following 3 criteria:

○: creases and wrinkles seldom produced
Δ: small number of creases and wrinkles upon drawing hard
×: creases and wrinkles produced easily

(9) Thickness of Layer B

A cutting surface of the film was microphotographed and measured with a scale.

(10) Masking property

The total light transmittivity (unit: %) was measured according to the method defined in JIS K-7105, and used as an index of masking property. A smaller value means higher masking property.

(11) Color tone

Evaluated based on L value and b value according to JIS Z8729-1994. A higher L value and a lower b value mean higher whiteness.

(12) Printability

After printing in a UV-curable ink (UVA710 Black, Seiko Advance Co. Ltd.), UV was radiated at an radiation energy of 500 mJ/cm$^2$ to give a print sample. The obtained sample was visually evaluated as follows:

○: Permitting high grade printing
Δ: Lower grade printing, but no practical problem
×: Uneven printing, practically problematic

(13) Antistatic property

After seasoning at 23°C, 65%RH for 24 hours, the surface resistivity (Ω/□) of the film surface was measured with an application voltage of 500V under the same atmosphere, using a high resistivity meter (Hiresta-IP, manufactured by Mitsubishi Petrochemical Co., Ltd.).

**Example 1**

<u>Preparation of void-forming agent</u>

Polymethylpentene (PMP, 60 wt%) having a melt viscosity ηm) of 1,300 poise, polypropylene (PP, 20 wt%) having a melt viscosity of 2,000 poise and polystyrene (PS, 20 wt%) having a melt viscosity of 3,900 poise were pellet-mixed and supplied to a vent-type twin-screw extruder at 285°C. The mixture was kneaded to give a void-forming agent (starting material a).

Preparation of polyester

A silica particle containing polyethylene terephthalate (PET) resin was obtained by the following method. An esterification reaction vessel was heated to 200°C, a slurry of terephthalic acid (86.4 parts by weight) and ethylene glycol (64.4 parts by weight) was charged in the vessel, and antimony trioxide (0.03 part by weight) as a catalyst, magnesium acetate tetrahydrate (0.088 part by weight) and triethylamine (0.16 part by weight) were added with stirring.

After heating the vessel with pressurization, an esterification reaction was conducted under pressure (gauge pressure 0.343 MPa, 240°C). The pressure in the vessel was reduced to the atmospheric pressure, and trimethyl phosphate (0.040 part by weight) was added. The mixture was heated to 260°C, trimethyl phosphate was added, and after 15 minutes of the addition, an ethylene glycol slurry (slurry density: 140 g/L) of aggregated silica particles having an average particle size of 1.0 μm (measured by SA-CP3, Shimadzu Scientific Instruments) was added in an amount of 500 ppm to the polyester obtained. After 15 minutes, the obtained esterification product was transferred into a polycondensation vessel, and polycondensation reaction was conducted at 280°C under reduced pressure. After the completion of the polycondensation reaction, the product was filtered with an ultra-thin stainless steel fiber filter having a 95% cut diameter of 28 μm (NASLON, Nippon Seisen) to give a polyethylene terephthalate (starting material b) having an intrinsic viscosity of 0.62 dl/g.

Preparation of a master batch containing titanium dioxide particles

The polyethylene terephthalate (starting material b) and anatase-type titanium particles treated with siloxane, having an average particle size of 0.2 μm (Sakai Chemical Industries CO. Ltd.), were mixed in a weight ratio of 50/50, and the mixture was kneaded in a vent-type kneader to give a master batch containing titanium dioxide particles (starting material c).

Preparation of a film

The above-mentioned starting materials were heat-dried in vacuo and successively weighed to a weight ratio of a/b/c=7/88/5 with continuous stirring to give a starting material for Layer A. Then, the starting material was fed into a double flighted twin-screw extruder, melt-kneaded, and then immediately fed to a feed block (coextrusion laminating device) through a gear pump, a filter and a 12 element static mixer equipped inside a short tube (diameter 50 mm). The pressure loss caused in the static mixer was 3.7 MPa.

On the other hand, a starting material of Layer B containing the above-mentioned starting materials in a weight ratio of b/c=60/40 was fed to a vent-type twin-screw extruder, melt-kneaded, and fed to the above-mentioned feed block through the gear pump and the filter.

In the feed block, Layer B was laminated on the both sides of Layer A in the same thickness. The extruders and the rotation of the gear pumps on Layer A side and Layer B side were controlled to make the thickness ratio B/A/B of the respective layers before orientation 10/80/10.

Then, the molten film laminated in the feed block was fed to a coat hanger die connected immediately under the feed block, and cast on a cooling drum having a surface temperature of 30°C to give an unoriented film having a thickness of 0.71 mm.

The unoriented film was heated to 65°C with a heating roll, and drawn 3.1 times between a pair of rolls having different peripheral velocities. Condensing infrared heaters were set at the middle part between the low-speed roll and the high-speed roll, the heaters facing each other via the film, to give the heat necessary and sufficient for uniform drawing of the film, and the film was heated from the both sides thereof.

The monoaxially oriented film thus obtained was led to a tenter, and transversely drawn 3.9 times with heating at a temperature of from 120°C to 150°C. The film was heated at 230°C for 7 seconds in the tenter to give a porous polyester laminate film having a thickness of 75 μm. The property values are shown in Table 1.

**Example 2**

In the same manner as in Example 1 except that the static mixer was not used, a porous polyester laminate film having a thickness of 74 μm was obtained. The property values of the obtained film are shown in Table 1.

**Comparative Example 1**

In the same manner as in Example 1 except that polymethylpentene (PMP) having a melt viscosity (ηo) of 4,300 poise was used instead of the polymethylpentene (PMP) having a melt viscosity (ηo) of 1,300 poise to prepare void-forming agent (starting material d), and that the mixing ratio of the starting material of Layer A was d/b/c=11/84/5 (weight ratio), a porous polyester laminate film having a thickness of 75 μm was obtained. The pressure loss caused in the static mixer was 3.8 MPa. The property values of the obtained film are shown in Table 1.

**Comparative Example 2**

In the same manner as in Example 1 except that the static mixer was not used and the starting material composition of Comparative Example 1 was used, a porous polyester laminate film having a thickness of 74 μm was obtained. The property values of the obtained film are shown in Table 1.

**Example 3**

In the same manner as in Example 1 except that, after the completion of the longitudinal orientation of the film, a coating solution having the following composition was applied to the both sides of the film with a wire bar (No. 5), and the film was dried, led to a tenter immediately, and transversely orientated, a porous polyester laminate film having coating layers and a thickness of 78 μm was obtained. The property values of the obtained film are shown in Table 2.

The composition of the coating solution used was as follows.

1. Water-dispersible copolymerized polyester resin: 2.5 wt%
2. Water-soluble urethane resin having terminal isocyanate groups blocked with hydrophilic groups: 4.0 wt%
3. Quaternary ammonium salt as antistatic agent: 0.5 wt%
4. Silica particles having an average particle size of 0.45 μm: 6.0 wt%
5. Calcium carbonate particles having an average particle size of 0.8 μm: 2.0 wt%
7. Water: 60 wt%
8. Isopropyl alcohol: 25 wt%

**Example 4**

In the same manner as in Example 3 except that the film obtained in Example 3 was cut into a fluffy shape, fed to a vent-type single-screw extruder (fluff extruder) and extruded to give recycle pellets (self-recyclable starting material, starting material e), and a starting material composition of Layer A was a/b/e=4/46/50 (weight ratio), a porous polyester laminate film containing a self-recyclable starting material and having coating layers and a thickness of 77 μm was obtained. The pressure loss caused in the static mixer was 3.2 MPa. The property values of the obtained film are shown in Table 2.

**Example 5**

The procedure followed Example 1 except that a feed block for 2 layers of 2 types was used instead of a feed block for 3 layers of 2 types. A starting material composition of Layer A was a/b/c=8/87/5 (weight ratio) and a starting material composition of Layer B was b/c/ [master batch containing a fluorescent brightener (OB-1) in a proportion of 5 wt% of polyethylene terephthalate] = 30/65/5 (weight ratio).

Layer B was laminated on one side of Layer A to give a film having a thickness ratio of the Layers A/B of 93/7 before orientation. Then, the molten polymer (film) laminated in the feed block was supplied to a coat hanger die connected immediately under the feed block, and cast on a cooling drum having a surface temperature of 30°C, with the surface of Layer A facing the surface of the drum, to give an unoriented film having a thickness of 0.47 mm. The pressure loss caused in the static mixer was 3.9 MPa.

Then, the unoriented film obtained was heated to 72°C using a heating roller, and drawn 3.4 times between a pair of rolls having different peripheral velocities. A condensing infrared heater was set at the middle part between the low-speed roll and the high-speed roll, and the side of Layer A was heated enough to allow for uniform drawing.

The monoaxially oriented film thus obtained was led to a tenter, and transversely drawn 3.9 times while heating the film at a temperature of from 120°C to 150°C. The film was heated at 220°C for 5 seconds in the tenter to give a porous polyester laminate film having a thickness of 50 μm. The property values of the obtained film are shown in Table 3.

**Comparative Example 3**

In the same manner as in Example 5 except that the static mixer was not used, that the starting material composition, a/b/c, of Layer A was changed to 11/84/5 (weight ratio), and that, during the longitudinal orientation, the film was drawn 3.2 times while heating the film at 83°C with a heating roller, a porous polyester laminate film having a thickness of 52 µm was obtained. The property values of the obtained film are shown in Table 3.

Table 1

| | | | Ex. 1 | Ex. 2 | Com. Ex. 1 | Com. Ex. 2 |
|---|---|---|---|---|---|---|
| Composition of Layer A | Composition ratio(weight ratio) | PET | 90.5 | 90.5 | 86.5 | 86.5 |
| | | PMP | 4.2 | 4.2 | 6.6 | 6.6 |
| | | PS | 1.4 | 1.4 | 2.2 | 2.2 |
| | | pp | 1.4 | 1.4 | 2.2 | 2.2 |
| | | $TiO_2$ | 2.5 | 2.5 | 2.5 | 2.5 |
| | ηo/ηs | | 0.33 | 0.33 | 1.10 | 1.10 |
| | Ps/Po | | 0.33 | 0.33 | 0.33 | 0.33 |
| | Pt | | 7 | 7 | 11 | 11 |
| Composition ratio of Layer B (weight ratio) | | PET | 80 | 80 | 80 | 80 |
| | | $TiO_2$ | 20 | 20 | 20 | 20 |
| Use of static mixer during production | | | used | none | used | none |
| Layer structure of film (µm); B/A/B | | | 6/63/6 | 6/62/6 | 6/63/6 | 6/62/6 |
| Apparent specific gravity of film | | | 1.08 | 1.11 | 1.10 | 1.11 |
| Void ratio of Layer A (voids/µm) | | | 0.31 | 0.22 | 0.19 | 0.15 |
| Glossiness (%) of Layer B | | | 50 | 51 | 50 | 49 |
| Handling property | | | ○ | Δ | × | × |
| Total light transmittivity (%) | | | 6.5 | 7.2 | 7.9 | 8.4 |
| Color tone L | | | 95 | 95 | 95 | 95 |
| b | | | 1.2 | 1.2 | 1.2 | 1.2 |

Table 2

| | | | Ex. 3 | Ex. 4 |
|---|---|---|---|---|
| Ratio of recyclable material of Layer A (wt%) | | | 0 | 50 |
| Composition ratio of Layer B (weight ratio) | | PET | 80 | 80 |
| | | $TiO_2$ | 20 | 20 |
| Layer structure of film (µm) ; B/A/B | | | 6/63/6 | 6/62/6 |
| Coating layer | Surface coated | | Both surfaces | Both surfaces |
| | Thickness (µm) | | 1.5 each | 1.5 each |
| Apparent specific gravity of film | | | 1.08 | 1.09 |
| Void ratio of Layer A (voids/µm) | | | 0.31 | 0.36 |
| Glossiness (%) of Layer B | | | 13 | 13 |
| Handling property | | | ○ | ○ |
| Total light transmittivity (%) | | | 6.4 | 6.0 |

Table 2 (continued)

| | | Ex. 3 | Ex. 4 |
|---|---|---|---|
| Color tone | L | 94 | 94 |
| | b | 1.2 | 1.2 |
| Printability | | ○ | ○ |
| Antistatic property (logΩ/□) | | 10.5 | 10.7 |

Table 3

| | | | Ex.5 | Com. Ex.6 |
|---|---|---|---|---|
| Composition of Layer A | Composition ratio (weight ratio) | PET | 89.5 | 86.5 |
| | | PMP | 4.8 | 6.6 |
| | | PS | 1.6 | 2.2 |
| | | PP | 1.6 | 2.2 |
| | | $TiO_2$ | 2.5 | 2.5 |
| | ηo/ηs | | 0.33 | 0.33 |
| | Ps/Po | | 0.33 | 0.33 |
| | Pt | | 8 | 11 |
| Composition ratio of Layer B (weight ratio) | PET | | 67.25 | 67.25 |
| | $TiO_2$ | | 32.50 | 32.50 |
| | OB-1 | | 0.25 | 0.25 |
| Use of static mixer during preparation | | | used | none |
| Method of longitudinal drawing and heating during production | | | combination with IR (one surface) | Heating roll |
| Complex constitution of film (µm); A/B | | | 45/5 | 47/3 |
| Apparent specific gravity of whole film | | | 0.99 | 1.01 |
| Void ratio of Layer A (voids/µm) | | | 0.27 | 0.19 |
| Dynamic strength of Layer B | | | 1.9 | 5.6 |
| Glossiness of Layer B (%) | | | 41 | 35 |
| Handling property | | | ○ | × |
| Total light transmittivity (%) | | | 8.2 | 9.0 |
| Color tone | | L | 94 | 92 |
| | | b | 1.2 | 1.2 |
| Thermal transfer sensitivity (%) | | | 104 | 92 |

The following consideration is given from the above Tables.

Since the porous polyester laminate films of Examples 1 to 5 meet the requirements defined in the present invention, they have superior properties as synthetic paper (e.g. printability, whiteness, reproducibility, masking property and the like) and superior handling property.

On the other hand, Table 1 shows that the handling property of the film was insufficient when the ratio of the number of voids to film thickness in Layer A did not meet the requirements of the present invention (Comparative Examples 1 and 2).

Further, Table 2 shows that when a waste produced during preparation of the film was recycled as a self-recyclable starting material, the film of the present invention (Example 4) did not show discoloration as compared to the nonrecycled film (Example 3).

Further, from Table 3, it is recognized that superior thermal transfer sensitivity of a base film for a thermal transfer recording material was achieved when the dynamic hardness and the glossiness of Layer B met the preferable requirements as defined in the present invention (Example 5).

As mentioned above, since the porous polyester film of the present invention shows superior dispersion of voids in the porous layer, i.e. a center layer (Layer A), the ratio of the number of voids to film thickness (number of voids in the film thickness direction relative to the film thickness) of the porous layer (Layer A) is high. Further, since the apparent specific gravity of the film as a whole is specified, the handling property of the film (resistance to creases) can be improved while maintaining superior properties of synthetic paper (e.g., printability, whiteness reproducibility, masking property and the like). Additionally, the surface strength of the film can be improved by providing a surface layer (Layer B), and due to the specific amount of white inorganic fine particles in Layer B, the film has superior masking property and whiteness (color tone). Moreover, since the hardness and glossiness of the surface of Layer B can be optimized, the film has superior sensitivity during the thermal transfer recording.

The voids observed in the film section in the electron photomicrograph taken in the above-mentioned (4) was counted. This number was divided by the observed area, standardized (converted to the number per unit area), and then multiplied by 2500 for conversion to the number of voids contained in a 50 μm square. The measurement was performed using five photographs for one sample, each containing different site of the sample, wherein sections at 5 different sites of the film per photograph were subjected to the measurement. The average of the values of the total 25 sections was calculated and taken as the number of voids of the sample (voids/2,500 $\mu m^2$).

(15) Spectral reflectance

An integrating sphere was set on a spectrophotometer (HITACHI Spectrophotometer U-3500) and the spectral reflectance to the light at the wavelength of 450 nm was determined. Using an alumina white board (210-0740 manufactured by Hitachi Instruments Co., Ltd.) as a standard reflector, the spectral reflectance of a sample was determined based on this reflectivity as 100%. One to five sheets of the film samples were layered and subjected to the measurement, based on which the relationship between thickness and reflectivity was determined. The reflectivity at the thickness of 188 μm was calculated by the interpolation based on this relationship and taken as the reflectivity of the sample. A higher value was evaluated to mean higher reflectivity to a visible light.

(16) Film thickness and apparent specific gravity

Samples were prepared by cutting a film into four 5.00 cm squares. Four of these squares were layered and the thickness was measured at 10 sites in 4 significant digits using a micrometer, and the average of the layer thickness was calculated. This average value was divided by 4 and rounded into 3 significant digits, which value was taken as the average film thickness per sheet (t: μm). Separately, the weight (w: g) of four of these samples was measured in 4 significant digits using an even balance, and the apparent specific gravity was calculated according to the following formula, wherein the significant digits were rounded into 3 digits.

$$\text{apparent specific gravity} = (w \times 10^4) / (5.00 \times 5.00 \times t \times 4)$$

**Example 6**

(Preparation of master pellets)

A polymethylpentene resin (DX820 manufactured by Mitsui Chemicals Co., Ltd.) (melt viscosity ($\eta_m$): 1300 poises, 60 wt%), a polystyrene resin (G797N manufactured by Japan Polystyrene Inc.) (melt viscosity ($\eta_s$) : 3900 poises, 20 wt%) and a polypropylene resin (J104WC manufactured by Grand Polymer Co., Ltd.) (melt viscosity: 2000 poises, 20 wt%) were pellet-mixed, and these pellets were supplied to a vent-type twin-screw extruder at 285°C and pre-kneaded. The molten resin was continuously supplied to a vent-type twin-screw kneader, kneaded and extruded. The obtained strands were cooled and cut into master pellets (A), a void forming agent.

(Preparation of starting material)

A polyethylene terephthalate resin (intrinsic viscosity: 0.62 dl/g, 91.0 wt%), which was vacuum-dried at 140°C for 8 hours (hereinafter referred to as a dried polyethylene terephthalate resin), was mixed with the master pellets (A) (9.0 wt%), which was vacuum-dried at 90°C for 4 hours to give a film starting material (I).

(Production of unoriented film)

The film starting material (I) was supplied to a twin-screw extruder (285°C), kneaded and extruded from a T die onto a cooling roll (25°C) to give an unoriented film having a thickness of 480 µm. In this step, the dwelling time of the molten resin in the melt line was about 3 minutes and the shear rate by T die was about 100 $sec^{-1}$.

(Production of biaxially oriented film)

The unoriented film was uniformly heated to 65°C using a heating roller, and longitudinally oriented 3.4-fold between two pairs of nip rolls having different rotation velocities. In this step, an infrared heater (rated power: 20 W/cm) with a reflecting plate was set in the middle of the nip rolls as a supplemental heating device, which was disposed at 2 cm from the film and facing the surface of the film, to heat the film. The obtained monoaxially oriented film was led to a tenter, heated to 150°C and transversely oriented 3.7-fold. The resulting film was width-fixed and subjected to a heat treatment at 220°C for 5 seconds, which was followed by transverse relaxation by 4% at 200°C to give a porous polyester film having a thickness of about 47 µm.

**Example 7**

A dried polyethylene terephthalate resin (86.0 wt%) was pellet-mixed with the master pellets (A) (14.0 wt%), which had been vacuum-dried at 90°C for 4 hours to give pellets as the film starting material (I). This film starting material (I) was supplied to a twin-screw extruder at 285°C, kneaded and extruded from a T die onto a cooling roll adjusted to 25°C to give an unoriented film having a thickness of 620 µm.
In the same manner as shown in Example 6 as to other conditions, a porous polyester film having a thickness of about 74 µm was obtained.

**Example 8**

The same starting material (I) as used in Example 6 and a dried polyethylene terephthalate resin were respectively supplied to a single-screw extruder at 285°C and a twin-screw extruder at 290°C. The molten resin discharged from the single-screw extruder and the molten resin discharged from the twin-screw extruder were respectively led to a feed block, via an orifice and a static mixer, and a layer consisting of the film starting material (I) (Layer B) and a layer consisting of the polyethylene terephthalate resin (Layer A) were layered in the order of Layer A/Layer B/Layer A. These laminated layers were coextruded from a T die onto a cooling roll at 25°C. The discharge amount of each extruder was adjusted to 1:8:1 in the thickness ratio of the Layers to give an unoriented film having a thickness of 580 µm. In this step, the dwelling time of the molten resin of the starting material I in the melt line was about 12 minutes, and the shear rate by T die was about 150 $sec^{-1}$.
In the same manner as in Example 6 as to other conditions, a porous polyester film having a thickness of about 58 µm was obtained.

**Comparative Example 4**

A polypropylene resin (J104WC manufactured by Grand Polymer Co., Ltd., melt viscosity ($\eta_o$) : 2000 poises) was supplied to a vent-type twin-screw extruder at 285°C and pre-kneaded. The resulting molten resin was continuously supplied to a vent-type single-screw kneader, kneaded and extruded. The obtained strands were cooled and cut to give master pellets (A), a void forming agent. Also, a mixture of a dried polyethylene terephthalate resin (50 wt%) and anatase titanium dioxide particles (50 wt%, average particle size: 0.3 µm) was pre-kneaded in the same manner as with the master pellets (A), extruded and cut to give master pellets (B) containing a white pigment. Then, a dried polyethylene terephthalate resin (87 wt%), the master pellets (B) (4 wt%), which had been vacuum-dried at 140°C for 8 hours, and the master pellets (A) (9 wt%), which had been vacuum-dried at 90°C for 4 hours, were mixed to give the starting material (I). Separately, a dried polyethylene terephthalate resin (70 wt%) and the master pellets (B) (30 wt%) were mixed to give the starting material (II).
The film starting material (I) and the film starting material (II) were separately supplied to a single-screw extruder at 285°C and a twin-screw extruder at 290°C. The molten starting materials were led to a feed block and a layer consisting of the film starting material (I) (Layer B) and a layer consisting of the film starting material (II) (Layer A) were laminated in the order of Layer A/Layer B/Layer A. In the same manner as in Example 8 as to other conditions, an unoriented film having a thickness of 600 µm was produced and oriented to give a porous polyester film having a thickness of about 53 µm.

**Comparative Example 5**

In the same manner as in Comparative Example 4 except that the white pigment-containing master pellets (B) prepared by changing the white pigment particles to calcium carbonate particles having an average particle size of 0.7 μm in Comparative Example 4 were used, an unoriented film having a thickness of 650 μm was produced and oriented to give a porous polyester film having a thickness of about 55 μm.

The above-mentioned Examples and Comparative Examples provide the following discussion. In Examples 6-8, porous polyester films having high reflectivity (ratio of the number of voids to film thickness; 0.26-0.37 void/μm) were obtained, which satisfied the requirements as defined in the present invention based on the effects of the optimized void forming resin, the effects of the twin-screw extruder and the effects of the static blender. In contrast, in Comparative Examples 4 and 5, the obtained films did not satisfy the requirements on the ratio of the number of voids to film thickness as defined in the present invention. Thus, no porous polyester film was obtained, which was suitable for the use as a material for various reflectors, which has a sufficient reflectivity to a visible light.

Table 4

| | $\eta_0$ poise | $\eta_s$ poise | $\eta_0/\eta_s$ | Contained particles | Layer constitution | Extruder | | Static mixer |
|---|---|---|---|---|---|---|---|---|
| | | | | | | Starting material (I) | Starting material (II) | |
| Ex.6 | 1300 | 3900 | 0.33 | none | Mono-layer | Twin-screw | | none |
| Ex.7 | 1300 | 3900 | 0.33 | none | Mono-layer | Twin-screw | | none |
| Ex.8 | 1300 | 3900 | 0.33 | none | Three-layer | Single-screw | Twin-screw | used |
| Com. Ex.4 | 2000 | - | - | $TiO_2$ | Three-layer | Single-screw | Twin-screw | none |
| Com. Ex.5 | 2000 | - | - | $CaCO_3$ | Three-layer | Single-screw | Twin-screw | none |

Table 5

| | Thickness (μm) | Apparent specific gravity | Voids | Void ratio (voids /μm) | Number of voids (voids/2500 μm$^2$) | Spectral reflectance (%) | Total evaluation |
|---|---|---|---|---|---|---|---|
| Ex.6 | 46.8 | 1.05 | 16 | 0.34 | 67 | 103 | ◎ |
| Ex.7 | 73.8 | 0.89 | 27 | 0.37 | 76 | 104 | ◎ |
| Ex.8 | 57.6 | 1.10 | 15 | 0.26 | 51 | 101 | ○ |
| Com. Ex.4 | 53.4 | 1.26 | 9 | 0.17 | 34 | 74 | × |
| Com. Ex.5 | 55.4 | 1.28 | 9 | 0.16 | 31 | 72 | × |

The porous polyester film of the present invention is a light polyester film having a high strength and superior processability. It also shows fine dispersion conditions of voids and superior reflectivity to a visible light. It is therefore suitable for various reflectors.

**Example 9**

(Preparation of master pellets)

A polymethylpentene resin (DX820 manufactured by Mitsui Chemicals Co., Ltd., melt viscosity ($\eta_o$) : 1,300

poises, 60.0 wt%), a polystyrene resin (G797N manufactured by Japan Polystyrene Inc., melt viscosity ($\eta_s$): 3,900 poises, 20.0 wt%) and a polypropylene resin (J104WC manufactured by Grand Polymer Co., Ltd., melt viscosity: 2,000 poises, 20.0 wt%) were pellet-mixed and supplied to a vent-type twin-screw extruder at 285°C and pre-kneaded. The molten resin mixture was continuously supplied to a vent-type single-screw kneader, kneaded and extruded. The obtained strands were cooled and cut to give master pellets (M1), a void-forming agent.

(Production of starting material of polyester)

Aggregated silica particles having a secondary aggregated particle size of 1.5 μm were admixed with ethylene glycol, and the slurry was subjected to a circulation treatment at 500 kg/cm$^2$ for a period necessary for 5 passes in a high pressure homogenizer and filtered with a viscose rayon filter (95% cut diameter: 30 μm) to give an ethylene glycol slurry containing the aggregated silica particles having an average particle size of 1.0 μm. The slurry concentration was 140 g/L.

A polyethylene terephthalate resin containing silica particles was obtained by the following method. An esterification reaction vessel was heated to 200°C, and a slurry containing a terephthalic acid (86.4 parts by weight) and ethylene glycol (64.4 parts by weight) was added to the vessel at 200°C. To this slurry were added, as a catalyst, antimony trioxide (0.03 part by weight), magnesium acetate 4 hydrate (0.088 part by weight) and triethylamine (0.16 part by weight) under stirring. Then, the mixture was subjected to a pressurized esterification at 240°C under a gauge pressure of 0.343 MPa. The pressure in the esterification vessel was reduced to the atmospheric pressure, and trimethyl phosphate (0.040 part by weight) was added. Furthermore, the vessel was heated to 260°C, and 15 minutes after the addition of trimethyl phosphate, the ethylene glycol slurry containing silica particles was added to the generated polyester in a concentration of 500 ppm. Fifteen minutes later, the obtained esterification product was transferred to a polycondensation reaction vessel, and subjected to a polycondensation reaction at 280°C under reduced pressure. After the completion of the polycondensation reaction, the reaction product was filtered with a nylon filter (95% cut diameter: 28 μm) to give a polyethylene terephthalate resin (intrinsic viscosity: 0.62 dl/g).

(Preparation of film starting material)

The polyethylene terephthalate resin (intrinsic viscosity: 0.62 dl/g, 91.0 wt%), which had been vacuum-dried at 140°C for 8 hours and the master pellets (M1) (9.0 wt%), which were vacuum-dried at 90°C for 4 hours, were pellet-mixed to give pellets as the starting material (C1).

(Preparation of unoriented film)

The starting material (C1) was supplied to a twin-screw extruder at 285°C, melted and kneaded. The molten resin was extruded from a T die onto a cooling roll at 25°C in the form of a sheet, and adhesively solidified by electrostatic pulsing to give an unoriented film having a thickness of 480 μm. In this step, the dwelling time of the molten resin in the melt line was about 3 minutes, and the shear rate by a T die was about 100/second.

(Preparation of biaxially orientated film)

The obtained unoriented film was uniformly heated at 65°C with a heating roll, and longitudinally oriented 3.4-fold between two pairs of nip rolls having different rotation velocities (low roll speed: 2 m/min, high roll speed: 6.8 m/min). In this step, infrared heaters (rated power: 20 W/cm) with a reflecting plate were placed at the middle part between the nip rolls disposed at 1 cm from the film and facing the both surfaces of the film, as supplemental heating devices, and the film was heated. Thus, the obtained monoaxially oriented film was led to a tenter and transversely oriented 3.7-fold at 150°C. The resulting film was width-fixed and subjected to a heat treatment at 220°C for 5 seconds, which was followed by transverse relaxation by 4% at 200°C to give a porous polyester film having a thickness of about 47 μm.

**Example 10**

The polyethylene terephthalate resin (intrinsic viscosity: 0.62 dl/g, 86.0 wt%), which had been vacuum-dried at 140°C for 8 hours, and the master pellets (M1) (14.0 wt%), which had been vacuum-dried at 90°C for 4 hours, were pellet-mixed to give a starting material (C2). This starting material (C2) was supplied to a twin-screw extruder at 285°C, melted and kneaded. This molten resin was extruded from a T die onto a cooling roll at 25°C in the form of a sheet, and adhesively solidified by electrostatic pulsing to give an unoriented film having a thickness of 620 μm. In the same manner as in Example 9 as to other conditions, a porous polyester film having a thickness of about 74 μm was obtained.

**Example 11**

In the same manner as in Example 10 except that the thickness of the unoriented film was changed to 1150 μm, a porous polyester film having a thickness of about 151 μm was obtained.

**Example 12**

The starting material (C1; the starting material (I)) and the same polyethylene terephthalate resin (the starting material (II)) as used for the starting material (C1) were respectively supplied to a single-screw extruder at 285°C and a twin-screw extruder at 290°C. The molten resin discharged from the single-screw extruder and the molten resin discharged from the twin-screw extruder were separately led to a feed block via an orifice and a static mixer, and a layer consisting of the film starting material (C1) (Layer B) and a layer consisting of the polyethylene terephthalate resin (Layer A) were laminated in the order of Layer A/Layer B/Layer A. The discharge amount of each extruder was adjusted to 1:8:1 in the thickness ratio of the Layers. These laminated layers were coextruded from a T die onto a cooling roll at 25°C, and adhesively solidified by electrostatic pulsing to give an unoriented film having a thickness of 580 μm. In this step, the dwelling time of the molten resin of the starting material (C1) in the melt line was about 12 minutes, and the shear rate by the T die was about 150/second. In the same manner as in Example 9 as to other conditions, a porous polyester film having a thickness of about 58 μm was obtained.

**Example 13**

In the same manner as in Example 9 except that the polymethylpentene resin used for the master pellets had a melt viscosity ($\eta_o$) of 4,300 poises (Mitsui Chemicals Co., Ltd., DX845), an unoriented film having a thickness of 620 μm was produced and oriented to give a porous polyester film having a thickness of about 53 μm.

**Comparative Example 6**

In the same manner as in Example 12 except that the resin discharged from the extruder was directly led to the feed block without via a static mixer, an unoriented film having a thickness of 650 μm was produced and oriented to give a porous polyester film having a thickness of about 67 μm.

**Comparative Example 7**

In the same manner as in Comparative Example 6 except that the polymethylpentene resin used for the master pellets had a melt viscosity ($\eta_o$) of 4,300 poises, (DX845 manufactured by Mitsui Chemicals Co., Ltd.) an unoriented film having a thickness of 580 μm was produced and oriented to give a porous polyester film having a thickness of about 56 μm.

In Examples 9-13, the fine dispersion of voids was accomplished by the effects of the optimized melt viscosity of void forming agents and the effects of the twin-screw extruder and the static blender, whereby the film satisfying the requirements of the present invention was obtained, that the average spectral reflectance of the film to electromagnetic wave having a wavelength of 450 nm is not less than 98.0%, and the absolute value of the difference between one side of the film and the opposite side thereof in the spectral reflectance is less than 6.0%. Thus, a porous polyester film consisting of a polyester resin having a high reflectivity could be obtained. In contrast, the films in Comparative Examples 6 and 7 did not satisfy the requirements of the present invention, the spectral reflectance. Thus, no porous polyester film suitable as a material for various reflectors, which has sufficient reflectivity to a visible light, was obtained.

Table 6

| | $\eta_0$ | $\eta_s$ | $\eta_0/\eta_s$ | Layer property | Extruder | | Static mixer |
|---|---|---|---|---|---|---|---|
| | | | | | Starting material (I) | Starting material (II) | |
| Ex. 9 | 1300 | 3900 | 0.33 | mono-layer | Twin-screw | - | none |
| Ex. 10 | 1300 | 3900 | 0.33 | mono-layer | Twin-screw | - | none |
| Ex. 11 | 1300 | 3900 | 0.33 | mono-layer | Twin-screw | - | none |
| Ex. 12 | 1300 | 3900 | 0.33 | three-layer | Single-screw | Twin-screw | used |

Table 6 (continued)

| | $\eta_0$ | $\eta_s$ | $\eta_0/\eta_s$ | Layer property | Extruder | | Static mixer |
|---|---|---|---|---|---|---|---|
| | | | | | Starting material (I) | Starting material (II) | |
| Ex. 13 | 4300 | 3900 | 1.10 | mono-Layer | Twin-screw | - | used |
| Com. Ex.6 | 1300 | 3900 | 0.33 | three-layer | Single-screw | Twin-screw | none |
| Com. Ex.7 | 4300 | 3900 | 1.10 | three-layer | Single-screw | Twin-screw | none |

Table 7

| | Ex. 9 | Ex. 10 | Ex. 11 | Ex. 12 | Ex. 13 | Com. Ex. 6 | Com. Ex. 7 |
|---|---|---|---|---|---|---|---|
| Thickness (μm) | 46.8 | 73.8 | 151.3 | 57.6 | 52.7 | 66.8 | 56.3 |
| Apparent specific gravity | 1.02 | 0.89 | 0.84 | 1.10 | 1.04 | 1.13 | 1.10 |
| Voids | 16 | 27 | 55 | 15 | 11 | 13 | 10 |
| Void ratio (voids /μm) | 0.34 | 0.37 | 0.36 | 0.26 | 0.21 | 0.19 | 0.18 |
| Number of Voids (number /2500 $\mu m^2$) | 67 | 76 | 72 | 51 | 45 | 38 | 35 |
| Average spectral reflectance (%) | 103.1 | 103.7 | 105.0 | 99.4 | 98.1 | 94.0 | 93.0 |
| Absolute value of difference in reflectivity | 1.8 | 1.2 | 1.1 | 0.9 | 1.9 | 2.9 | '3.3 |
| Total evaluation | ◎ | ◎ | ◎ | ○ | ○ | × | × |

As explained above, the porous polyester film as used according to the present invention has a high spectral reflectance of 98.0% or more to an electromagnetic wave in the wavelength of 450 nm, because of the fine dispersion of voids in the film. Furthermore, the absolute value of the difference between one surface of the film and the other surface in the spectral reflectance is less than 6.0%. As a result, a porous polyester film improved in the reflectivity to a visible light can be obtained. The porous polyester film of the present invention is suitable as a material for various reflectors, since it is light, highly strong and has superior processability and productivity.

(17) Thickness of film -

Using Digital Micrometer M-30 manufactured by Sony Precision Technology Inc., the thickness of the film was measured at 20 sites selected at random and the average value thereof was taken as the thickness (mm) of the film.

(18) Handling property of film (mountability on the insulating part of low voltage induction electric motor slot)

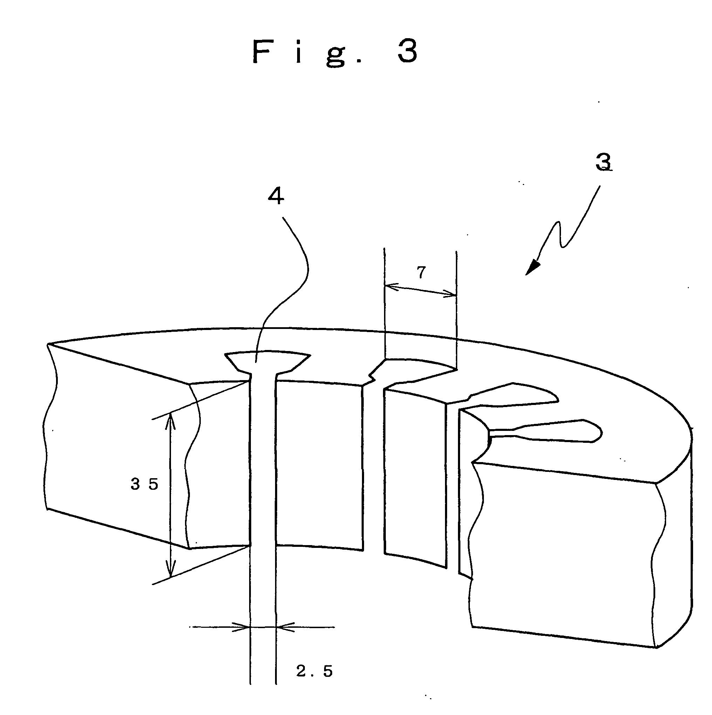

Each sample was cut into 100 sheets having the size shown in Fig. 1, bent into the shape shown in Fig. 2 and inserted into the film insertion part 4 of the motor slot model 3 shown in Fig. 3 to evaluate the mountability. The evaluation criteria were as follows.

○: No insertion failure due to breaking or buckling in 100 sheets.
Δ: Not less than one sheet and less than 5 sheets showed insertion failure due to breaking or buckling in 100 sheets.
×: Not less than 5 sheets showed insertion failure due to breaking or buckling in 100 sheets.

(19) Content of cyclic trimer (hereinafter referred to as CT) in polyester resin

A sample (300 mg) was dissolved in 3 ml of a mixed solution of hexafluoroisopropanol/chloroform (volume ratio: 2/3). The mixture was diluted with 30 ml of chloroform. To the solution was added 15 ml of methanol to precipitate a polymer, and the mixture was filtered. The filtrate was evaporated to dryness and 10 ml of dimethylformamide was added to make the volume constant. The content of CT was determined by HPLC.

(20) Retention of elongation after heat treatment (140°C×1000 hr)

Using 20 g of a mixed refrigerant of hydrofluorocarbon (produced by Asahi Glass Co., Ltd., R410A) as a refrigerant and 50 g of a synthetic polyol ether oil as an oil, a test sample was treated at 140°C and 40 atm for 1000 hr in a 120 cc autoclave.

Note that, prior to the charge of the refrigerant and the oil, the test sample was dehydrated in vacuo for 3 hr at 140°C, 26.7 Pa (0.2 Torr) in the autoclave. The oil was dehydrated, too, to make the moisture percentage less than 50 ppm, before use.

Elongation at break of the film in the longitudinal direction and the width direction was measured before and after the above-mentioned treatment. The ratio (retention) of the elongation at break of the film after the heat treatment to that of the film before the treatment was calculated and the ratio was taken as the retention of elongation. The retention of elongation was shown in percentage and the % unit was rounded to the nearest whole number. Note that the elongation at break was measured in accordance with the method prescribed in JIS-C2318.

(21) Dielectric constant

Dielectric constant was measured in accordance with JIS-C2151-1990, "test method for an electrical plastic film".

(22) Heat shrinkage

Test sample was prepared according to the method defined in JIS-C2318. The dimensional changes in the longitudinal direction of the film was measured after changing the heat treatment temperature and heat treatment time to 160°C ± 0.5°C and 120 minutes and according to the following formula:

$$\text{Heat shrinkage (\%)} = [(A-B)/A]x100$$

wherein A is a length (mm) of the film in the longitudinal direction before the heat treatment and B is a length (mm) of the film in the longitudinal direction after the heat treatment.

**Example 14**

(Preparation of void-forming agent)

Polymethylpentene resin (60 wt%) having a melt viscosity ($\eta_o$) of 1300 poise, polypropylene resin (20 wt%) having a melt viscosity of 2000 poise, and polystyrene resin (20 wt%) having a melt viscosity ($\eta_s$) of 3900 poise were pellet-mixed. The mixture was fed to a vent-type twin-screw extruder of 285°C and kneaded to give a void-forming agent (A).

(Production of starting material of polyester)

Aggregated silica particles having a secondary aggregated particle size of 1.5 μm were mixed with ethylene glycol. The resulting slurry was treated with circulation in a high-pressure homogenous disperser for a period necessary for 5 passes at 49.0 MPa. Then, the mixture was filtered with a viscose rayon filter (95% cut diameter: 30 μm) to give an ethylene glycol slurry containing aggregated silica particles having an average particle size of 1.0 μm. The slurry concentration was 140 g/L.

Polyethylene terephthalate containing silica particles (A) was prepared by the following method. An esterification vessel was heated to 200°C, whereupon a slurry containing 86.4 parts by weight of terephthalic acid and 64.4 parts by weight of ethylene glycol was placed in the vessel. To the mixture were added, as a catalyst, 0.03 part by weight of antimony trioxide, 0.088 part by weight of magnesium acetate tetrahydrate and 0.16 part by weight of triethylamine while stirring. Upon pressurization and heating, pressure esterification was conducted under pressure under the conditions of gauge pressure of 0.34 MPa and temperature of 240°C. After the treatment, the pressure inside the vessel for the esterification was reduced to the atmospheric pressure and 0.040 part by weight of trimethyl phosphate was added. The temperature was again elevated to 260°C. Fifteen minutes after the addition of trimethyl phosphate, the ethylene glycol slurry containing the above-mentioned silica particles was added in an amount of 500 ppm of the produced polyester. After 15 minutes, the obtained esterification product was transferred to a polycondensation vessel and polycondensation was conducted at 280°C under reduced pressure. After the completion of polycondensation, the mixture was filtered with a nylon filter having a 95% cut diameter of 28 μm to give, polyethylene terephthalate (PET) resin pellets having an intrinsic viscosity of 0.63 dl/g. The obtained PET had a CT content of 0.90 wt%.

Then, the obtained PET resin pellets were sealed in a hermetically sealed container and the container was purged with nitrogen. The pellets were heated to 220°C and heat treated for 48 hours with stirring to give a starting material (B) of PET resin pellets. The intrinsic viscosity of the obtained PET resin pellets (B) was 0.64 dl/g, and the CT content of PET was 0.26 wt%.

(Production of film)

The above-mentioned void-forming agent (A) and the PET resin pellets (B) were separately heated, vacuum dried and fed to a separate hopper. The mixture was continuously weighed to maintain a weight ratio of A/B = 7/93 with a screw feeder equipped at the bottom of the hopper and stirred continuously with an in-line mixer and fed to a single-screw extruder equipped with a double flighted screw. The aforementioned mixture of the starting materials (A/ B = 7/93; weight ratio) is to be referred to hereinafter as the starting material.

Then, the starting material for a core layer, which had been melted and mixed in an extruder, was fed to a feed block (coextrusion laminating device) via a gear pump, a filter, a ten element in-line static mixer installed in a short pipe having a diameter of 50 mm.

On the other hand, the PET resin pellets (B) alone were used as the starting material of a skin layer. Upon vacuum drying, they were fed to a twin-screw extruder other than that for the aforementioned core layer, and then fed to the feed block via the steps of melt-extrusion, gear pumping and filtering.

In the feed block, a skin layer was laminated uniformly on both surfaces of the core layer. The rotation velocities of the extruders at the core layer side and the skin layer side, and the number of rotations of the gear pump were controlled to result a thickness ratio of skin layer/core layer/skin layer 10/80/10.

Then, the molten polymer laminated in the feed block was fed to a coat hanger die placed right under the feed block and cast on a cooling drum having a surface temperature of 30°C. At the same time, the cast polymer was forced to cool from the opposite side by the air knife method to produce an unoriented film having a thickness of 2.3 mm.

At this time, a peripheral velocity of cooling drum was 6.45 m/min, a filtration pressure loss due to the filter at the side of the aforementioned core layer was 9.2 MPa, a pressure loss required for the passage through the in-line static mixer was 2.9 MPa, and an average melt dwelling time calculated by dividing melt line volume from the extruder screw to the die by polymer flow rate was 7.5 minutes. On the other hand, a filtration pressure loss due to the filter at the aforementioned skin layer side was 8.8 MPa, and an average melt dwelling time was 10 minutes.

Then obtained unoriented film was heated to 65°C with several heating rollers according to the aforementioned method, drawn 3.1 times between the rollers having different peripheral velocities, and quickly cooled. During the drawing, infrared heaters having a reflector were set at the middle part between a low speed roller (final heating roller) and a high speed roller (first cooling roller), the heaters facing each other across the film, and the film was heated from both surfaces. The heat quantity necessary for uniform drawing was provided, and the drawing was instantaneously initiated and completed to give a monoaxially oriented film.

The obtained monoaxially oriented film was introduced into a tenter and oriented 3.8 times in the width direction while elevating the temperature from 120°C to 150°C. The film was further heat treated for 30 sec at 205°C in the tenter, cooled and the both ends (clip retention parts) were cut off.

The film without the clip retention parts was heated again with hot air (180°C) and relaxed by 1.5% in the longitudinal direction, cooled down and wound up.

The property values of the porous polyester film obtained in this manner are shown in Table 8.

## Example 15

Using the same starting materials and the same discharge conditions as in Example 14, a molten polymer was cast on a cooling drum, wherein the peripheral velocity of the cooling drum was 4.61 m/min, to give an unoriented film having a thickness of 3.2 mm. Then, the longitudinal orientation and the transverse orientation of the film were conducted in the similar manner to that in Example 14. The film was then heat treated for 40 sec at 200°C in the tenter, cooled, and the both ends (clip retention parts) were cut off. The resulting film was rolled up without relaxation in the longitudinal direction.

The obtained film roll was slit in 1.3 m width, reversely rolled up, and relaxed using a floating dryer. The relaxation conditions were as follows: hot air temperature 190°C, film running speed 10 m/min, wherein moving tension was controlled to achieve the relaxation by 2.0%. The property values of the obtained film are shown in Table 8.

**Comparative Example 8**

(Production of starting material of polyester)

The same PET resin pellets (intrinsic viscosity 0.63 dl/g, CT content: 0.9 wt%) containing 0.05 wt% of aggregated silica particles as used in Example 14 were used as a starting material. Solid phase polymerization described in the following was used for a de-oligomer treatment (treatment for removing CT), instead of $N_2$-purge method used in Example 14.

Solid phase polymerization: The starting material was heat-treated at 220°C for 48 hours with stirring in a vacuum vessel to give a starting material of PET resin pellets (C). The intrinsic viscosity of the obtained PET resin pellets (C) was 0.76 dl/g and the CT content of the PET was 0.25 wt%.

(Production of film)

Instead of the PET resin pellets (B) used in Example 14, the PET resin pellets (C) obtained by the solid phase polymerization as mentioned above was used.

The same production conditions as in Example 14 resulted in too increased a load current of the extruder and too increased a filtration pressure of the filter, which made the production of a film unattainable. Therefore, the discharge amounts of the starting material of the core layer and the starting material of the skin layer (extruder and number of rotations of gear pump) were appropriately adjusted to give an unoriented film having a thickness of 2.3 mm.

At this time, the peripheral velocity of the cooling drum was 3.13 m/min, filtration pressure loss of the filter at the core layer side was 9.5 MPa, pressure loss required for the passage through the in-line static mixer was 3.0 MPa, and average melt dwelling time calculated by dividing the melt line volume from the extruder screw to the die by the flow rate of the polymer was 15.5 minutes.

The unoriented film obtained according to the aforementioned method was heated to 85°C using several heating rollers according to a conventional method and oriented 2.9 times in the longitudinal direction.

The obtained monoaxially oriented film was the introduced into a tenter, heated to 120°C and oriented 3.7 times in the width direction. The film was then heat-treated for 60 seconds at 230°C in the tenter to give a biaxially oriented film. Note that the film was not stretched in this Comparative Example 8. The property values of the obtained film are shown in Table 8.

Table 8

| Properties | Unit | Ex. 14 | Ex. 15 | Com. Ex.8 |
|---|---|---|---|---|
| Intrinsic viscosity of film | g/dl | 0.62 | 0.62 | 0.73 |
| Thickness of film | μm | 250 | 350 | 250 |
| Apparent specific gravity | - | 1.09 | 1.11 | 1.11 |
| Dielectric constant | - | 2.4 | 2.4 | 2.4 |
| Void ratio | | 0.26 | 0.25 | 0.14 |
| Handling property | - | ○ | ○ | × |
| Content of CT | Weight% | 0.37 | 0.37 | 0.49 |
| Residual film elongation (after 140°C×1000 hr) longitudinal direction/transverse direction | % | 90/95 | 103/91 | 74/61 |
| Thermal shrinkage of film in the longitudinal direction (160°C×2 hr) | % | 0.8 | 0.4 | 1.4 |

Table 9

| | $\eta_0$ (poise) | $\eta_s$ (poise) | $\eta_0/\eta_s$ | Layer property | Extruder | | Static mixer |
|---|---|---|---|---|---|---|---|
| | | | | | Starting material (I) | Starting material (II) | |
| Ex. 16 | 1300 | 3900 | 0.33 | mono-layer | Twin-Screw | - | none |
| Ex. 17 | 1300 | 3900 | 0.33 | mono-layer | Twin-Screw | - | none |

Table 9 (continued)

| | $\eta_0$ (poise) | $\eta_s$ (poise) | $\eta_0/\eta_s$ | Layer property | Extruder | | Static mixer |
|---|---|---|---|---|---|---|---|
| | | | | | Starting material (I) | Starting material (II) | |
| Ex. 18 | 1300 | 3900 | 0.33 | three-layer | Single-Screw | Twin-screw | used |
| Ex. 19 | 4300 | 3900 | 1.10 | mono-layer | Twin-Screw | - | used |
| Com. Ex.19 | 1300 | 3900 | 0.33 | three-layer | Single-Screw | Twin-screw | none |
| Com. Ex.10 | 4300 | 3900 | 1.10 | three-layer | Single-screw | Twin-screw | none |

Table 8 shows that the films of Examples 14 and 15 satisfied the requirements of the present invention, and the films had a low oligomer content, resistance to embrittlement in a refrigerant gas at high temperature under high pressure for a long term, low dielectric property and fine handling property, which are suitable properties of an insulating material for hermetic motors.

The film (Comparative Example 8) produced by solid phase polymerization of the starting material of PET resin to make PET have a high molecular weight and a low oligomer content, and by orientation and heat treatment under conventionally known conditions could not satisfy the ratio of the number of voids to film thickness as defined in the present invention, due to the longer dwelling time of the polymer in the melt line. The film had drastically poor handling property. In addition, due to the re-precipitation of the oligomer component in the melt line, the oligomer content did not become low enough as compared to Examples 14 - 15, and retention of elongation after treatment at 140°C for 1000 hours was poor.

As explained in the above, the porous polyester film of the present invention showed less re-precipitation of the oligomer, showed a less decrease in the elongation even after a treatment at high temperature for a long time (140°C×1000 hours), and had a uniform porous structure. As a result, it is beneficially superior in low dielectric constant and handling property (bending, breaking). Thus, this film is useful as an electric motor insulating film for heat resistant frigerant compressors to be incorporated into refrigerators and air conditioners, which compressors using substitute chlorofluorocarbon as a refrigerant and a polar oil, and being suitable for use at high temperature, particularly as an insulating material for hermetic motor. It is also useful as a substrate for flexible printing circuits, flat cables, insulating tapes, adhesive tapes, labels and the like.

(23) Evaluation of adhesion at normal state

A polyester pressure sensitive adhesive tape (Nitto 31B) was applied to a surface of a release layer of a film, and press-adhered with a 5 kgf/50 mm-width pressure roller. The film was allowed to stand at room temperature for 20 hours and the adhesion between the release layer and the pressure sensitive adhesive tape was measured with a tensile tester (peeling angle: 90°), which was followed by evaluation according to the following 3 criteria. The preferable range of adhesion was not less than 8 gf/50 mm width and less than 17 gf/50 mm width, wherein too strong an adhesion or too weak an adhesion was not preferable.

A: not less than 8 gf/50 mm-width and less than 17 gf/50 mm width
B: not less than 17 gf/50 mm width
C: less than 8 g/50 mm width

(24) Height of burr

The sample film was cut with a paper cutter (Safety NS type No. 1, manufactured by UCHIDA) and the length of the floss at the cutting part (burr extending in the direction of cutting) was measured under a light microscope (OPTIPHOT HFX-II manufactured by NIKON) at 200 magnifications and evaluated according to the following criteria.

A: not more than 10 μm
B: longer than 10 μm and not more than 15 μm (practically usable)
C: longer than 15 μm (practically problematic)

**Example 16**

(Preparation of master pellets)

Polymethylpentene resin (60 wt%, DX820 manufactured by Mitsui Chemicals Co., Ltd.) having a melt viscosity ($\eta_o$) of 1,300 poise, polystyrene resin (20 wt%, G797N manufactured by Japan Polystyrene Inc.) having a melt viscosity ($\eta_s$) of 3,900 poise and polypropylene resin (20 wt%, J104WC manufactured by Grand Polymer Co., Ltd.) having a melt viscosity of 2,000 poise were pellet-mixed, and the mixture was supplied to a vent-type twin-screw extruder at 285°C and pre-kneaded. This molten resin was supplied continuously to the vent-type single-screw kneader, kneaded and extruded, and the obtained strands were cooled and cut to give void-forming agent master pellets (M1).

(Production of starting material of polyester)

Aggregated silica particles having a secondary aggregated particle size of 1.5 μm was mixed with ethylene glycol and the obtained slurry was circulated using a high pressure uniform dispersing machine for a period necessary for 5 passes at 49.0 Mpa, and filtered with a viscose rayon filter having a 95% cutting diameter of 30 μm to give an ethylene glycol slurry containing aggregated silica particles having an average particle size of 1.0 μm. The slurry concentration was 140 g/L.

A polyethylene terephthalate resin containing silica particles was obtained as in the following.

An esterification reaction vessel was heated to 200°C, a slurry containing terephthalic acid (86.4 parts by weight) and ethylene glycol (64.4 parts by weight) was charged, and antimony trioxide (0.03 part by weight) as a catalyst, magnesium acetate tetrahydrate (0.088 part by weight) and triethylamine (0.16 part by weight) were added under stirring. Then, pressurization and heating were performed and esterification was conducted under pressure at 240°C and 0.343 MPa of a gauge pressure. Thereafter, the pressure in the esterification vessel was reduced to the atmospheric pressure, trimethyl phosphate (0.040 part by weight) was added and the temperature was elevated to 260°C. Fifteen minutes after the addition of trimethyl phosphate, the above-mentioned ethylene glycol slurry containing silica particles was added in a concentration of 500 ppm to the generated polyester. After 15 minutes, the obtained esterification product was transferred to a polycondensation vessel, and the polycondensation reaction was conducted at 280°C under reduced pressure. After the completion of the polycondensation reaction, the reaction mixture was filtered with NASLON filter having a 95% cut diameter of 28 μm to give a polyethylene terephthalate resin having an intrinsic viscosity of 0.62 dl/g.

(Preparation of starting material)

The aforementioned polyethylene terephthalate resin dried in vacuo for 8 hours at 140°C (91 wt%) having an intrinsic viscosity of 0.62 dl/g and the aforementioned master pellets (M1) dried in vacuo for 4 hours at 90°C (9 wt%) were pellet-mixed to give a starting material (C1).

(Preparation of unoriented film)

The aforementioned starting material (C1) was supplied to a twin-screw extruder at 285°C, melted and kneaded. This molten resin was extruded in the state of a sheet on a cooling roll at 25°C using a T die and adhesively solidified by static application method to give an unoriented film having a thickness of 480 μm. In this case, the dwelling time of the molten resin in the melt line was about 3 minutes, the shear rate by the T die was about 100/second.

(Preparation of biaxially oriented film)

The obtained unoriented film was uniformly heated to 65°C with heating rollers, and longitudinally drawn 3.4 times between two pairs of nip rolls having different peripheral velocities (lower roll speed=2 m/min, higher roll speed=6.8 m/min). As an auxiliary heating device for the film, infrared heaters (rated output: 20 W/cm) equipped with a gold reflector plate were set facing the both surfaces of the film at 1 cm distance from each surface of the film. The monoaxially oriented film thus obtained was led to a tenter, heated to 150°C and transversely drawn 3.7 times. The film was heated at 220°C for 5 seconds in the tenter and relaxed by 4% in the width direction at 200°C to give a porous polyester film having a thickness of 47 μm.

(Preparation of releasing film)

A porous polyester releasing film was prepared by applying the following coating solution on one side of the obtained porous polyester film as a substrate with a wire bar, and drying and curing at 140°C for 30 seconds. The coating solution was prepared by diluting an addition polymerization reaction type silicone resin (TPR-6721 manufactured by Toshiba Silicones co., Ltd.) in a solvent, adding platinum catalyst in an amount of 1 part by weight per 100 parts by weight of the silicone resin. The releasing layer of the obtained film had a dry solid amount of 0.15 g/$m^2$ of the film surface.

**Example 17**

The aforementioned polyethylene terephthalate resin dried in vacuo for 8 hours at 140°C (86 wt%) having an intrinsic viscosity of 0.62 dl/g, and the aforementioned master pellets (M1) dried in vacuo for 4 hours at 90°C (14 wt%) were pallet-mixed to give a starting material (C2). The starting material (C2) was supplied to a twin-screw extruder at 285°C, melted and kneaded. This molten resin was extruded in the state of a sheet on a cooling roll at 25°C using a T die and adhesively solidified by static application method to give an unoriented film having a thickness of 620 μm. In the same manner as in Example 16 other than the above-mentioned conditions, a porous polyester releasing film having a thickness of 74 μm was obtained.

**Example 18**

The starting material of film (C1: starting material I) was supplied to a single-screw extruder at 285°C and a polyethylene terephthalate resin (starting material II), which was the same as that used for the starting material (C1), was supplied to a twin-screw extruder at 290°C. The molted resin discharged from the single-screw extruder was led to a feed block via an orifice and the resin discharged from the twin-screw extruder was led to the feed block via a static mixer, and a layer (Layer B) consisting of the starting material (C1) and a layer (Layer A) containing polyethylene terephthalate resin were laminated in the order of Layer A/Layer B/Layer A. The discharged amount of each extruder was adjusted to make the thickness ratio of the layers 1:8:1, and these materials were coextruded on a cooling roll at 25°C using a T die and adhesively solidified by static application method to give an unoriented film having a thickness of 580 μm. In this case, the dwelling time of the molten resin of the starting material (C1) in the melt line was about 12 minutes, the shear rate by the T die was about 150/second. In the same manner as in Example 16 other than the above-mentioned conditions, a porous polyester releasing film having a thickness of 58 μm was obtained.

**Example 19**

In the same manner as in Example 16 except that a polymethylpentene resin having a melt viscosity ($\eta_o$) of 4,300 poise (DX845 manufactured by Mitsui Chemicals Co., Ltd.) was used as master pellets, an unoriented film having a thickness of 620 μm was prepared and drawn to give a porous polyester releasing film having a thickness of 53 μm.

**Comparative Example 9**

In the same manner as in Example 18 except that the resin discharged from the extruder was directly led to the feed block without using the static mixer, an unoriented film having a thickness of 650 μm was prepared and drawn to give a porous polyester releasing film having a thickness of 67 μm.

**Comparative Example 10**

In the same manner as in Comparative Example 9 except that a polymethylpentene resin having a melt viscosity ($\eta_o$) of 4,300 poise (DX845 manufactured by Mitsui Chemicals Co., Ltd.) was used as a starting material of master pellets, an unoriented film having a thickness of 580 μm was prepared and drawn to give a porous polyester releasing film having a thickness of 56 μm.

Table 10

| | Ex. 16 | Ex. 17 | Ex. 18 | Ex. 19 | Com. Ex. 9 | Com. Ex. 10 |
|---|---|---|---|---|---|---|
| Thickness (μm) | 46.8 | 73.8 | 5736 | 52.7 | 66.8 | 56.3 |
| Apparent specific gravity | 1.02 | 0.89 | 1.10 | 1.04 | 1.13 | 1.10 |
| Voids | 16 | 27 | 15 | 11 | 13 | 10 |
| Void ratio (voids/ μm) | 0.34 | 0.37 | 0.26 | 0.21 | 0.19 | 0.18 |

Table 10 (continued)

| | Ex. 16 | Ex. 17 | Ex. 18 | Ex. 19 | Com. Ex. 9 | Com. Ex. 10 |
|---|---|---|---|---|---|---|
| Number of voids (voids/ 2500 $\mu m^2$) | 67 | 76 | 51 | 45 | 38 | 35 |
| Normal state adhesion | A | A | A | A | A | A |
| Height of burr | A | A | B | B | C | C |
| Total evaluation | ◎ | ◎ | ○ | ○ | × | × |

The films of Examples 16 and 17 capable of satisfying the requirements of the present invention showed shorter burr upon punching out through holes, and the punching out performance was fine. On the contrary, the films of Comparative Examples 9 and 10 showed higher burr upon punching out through holes, and the punching out performance was insufficient, because the ratio of the number of voids was outside the range of the present invention.
The films of Examples 16 and 17, that satisfied the requirements of the present invention, showed a lower height of the burr upon punching out of through holes, and the punching out property was fine. In contrast, the films of Comparative Examples 9 and 10 allowed high burr upon punching out of a through hole, because they were outside the range of the ratio of the number of voids of the present invention, and the punching out property was insufficient.
As explained in the above, the porous polyester release film as used according to the present invention shows superior void dispersion state in a substrate film, and contains a greater number of voids in the substrate film thickness direction relative to the substrate film thickness. As a result, occurrence of burr can be inhibited upon punching out of through holes.
According to the present invention, use of a porous polyester film having a ratio of the number of voids relative to film thickness of not less than 0.20 void/μm and high reflectivity to visible light can be obtained from a porous polyester film made from polyester as a main starting material. Thus, the present invention affords a lightweight porous polyester film as used according to the invention having a high strength and superior processability and productivity, which is suitable as a material for various reflectors.

## Claims

1. Use of a porous polyester film comprising a fine porous layer (Layer A) comprising voids formed by dispersing in a polyester resin, a thermoplastic resin incompatible with said polyester, and drawing the film 2.8-4.0 times in the longitudinal direction and 3.2 - 4.2 times in the transverse direction, and having a ratio of the number of voids to film thickness of not less than 0.20 void/μm as obtained by dividing the number of voids in the thickness direction of the cross-section in the direction of orientation of the film by the film thickness, wherein the film has a spectral reflectance to a light having a wavelength of 450 nm of not less than 98 % as a display reflector.

2. The use as defined in claim 1, comprising a polyester layer (Layer B) containing white pigment particles in a proportion of 5 - 45 wt% of the layer, which is laminated on either or both surfaces of Layer A by coextrusion.

3. The use as defined in claim 1 or claim 2, wherein the film has an apparent specific gravity of the entire film of not more than 1.25.

4. The use as defined in claim 1 or claim 2, wherein the film has an apparent specific gravity of the entire film of not less than 0.85.

5. The use as defined in claim 2, wherein a surface of Layer B has a dynamic hardness of not more than 5.0 gf/$\mu m^2$.

6. The use as defined in claim 2, wherein the surface of Layer B has a 60° specular glossiness of not less than 20%.

7. The use as defined in claim 1, wherein the incompatible thermoplastic resin is a polystyrene resin.

8. The use as defined in claim 1, wherein the incompatible thermoplastic resin comprises a polystyrene resin and a polyolefin resin.

9. The use as defined in claim 8, wherein a main component of the polyolefin resin is a polymethylpentene resin.

**10.** The use as defined in claim 8, wherein a melt viscosity ηo of a main component of the polyolefin resin and a melt viscosity ηs of the polystyrene resin satisfy the following formula (I)

$$\eta o/\eta s \leqq 0.8 \quad \text{(I)}$$

**11.** The use as defined in claim 2, wherein the white pigment particle is titanium oxide.

**12.** The use as defined in claim 9, wherein the incompatible thermoplastic resin content satisfies the following formulas (III) and (IV)

$$0.01 \leqq Ps/Po \leqq 1.0 \quad \text{(III)}$$

$$2 \leqq Pt \leqq 15 \quad \text{(IV)}$$

wherein Po and Ps are each a content (unit: wt%) of polymethylpentene resin and polystyrene resin relative to the film as a whole, and Pt is a content (unit: wt%) of the incompatible thermoplastic resins relative to the film as a whole.

**13.** The use as defined in claim 1, wherein Layer A does not comprise polyethylene glycol or a derivative thereof.

**14.** The use as defined in claim 1, wherein an absolute value of the difference in spectral reflectance between one surface and the other surface of the film, to a light having a wavelength of 450 nm is less than 6.0%.

**15.** The use as defined in claim 1, wherein Layer A has a white pigment particle content of not more than 5 wt%.

**16.** The use as defined in claim 1, which comprises a self-recyclable material in a proportion of not less than 20 wt%.

**Patentansprüche**

**1.** Verwendung einer porösen Folie, die eine feine poröse Schicht (Schicht A) umfasst, welche Hohlräume umfasst, die durch das Dispergieren eines thermoplastischen Harzes in einem Polyesterharz, wobei das thermoplastische Harz mit diesem Polyester inkompatibel ist, und das 2,8fache bis 4,0fache Verstrecken der Folie in der Längsrichtung und das 3,2fache bis 4,2fache in der Querrichtung gebildet werden, und die ein Verhältnis zwischen der Anzahl der Hohlräume und der Foliendicke von nicht kleiner als 0,20 Hohlräume/μm hat, das durch Dividieren der Anzahl der Hohlräume in der Dickenrichtung des Querschnitts in der Orientierungsrichtung der Folie durch die Foliendicke erhalten wird, wobei die Folie einen spektralen Remissionsgrad gegenüber einem Licht einer Wellenlänge von 450 nm von nicht weniger als 98 % hat, als Display-Reflektor.

**2.** Verwendung gemäß Anspruch 1, umfassend eine Polyester-Schicht (Schicht B), die weiße Pigmentteilchen in einem Anteil von 5 - 45 Gew.-% der Schicht enthält, die auf eine oder beide Oberflächen der Schicht A durch Co-Extrusion laminiert wird.

**3.** Verwendung gemäß den Ansprüchen 1 oder 2, wobei die Folie ein scheinbares spezifisches Gewicht der gesamten Folie von nicht mehr als 1,25 hat.

**4.** Verwendung gemäß den Ansprüchen 1 oder 2, wobei die Folie ein scheinbares spezifisches Gewicht der gesamten Folie von nicht weniger als 0,85 hat.

**5.** Verwendung gemäß Anspruch 2, wobei eine Oberfläche der Schicht B eine dynamische Härte von nicht mehr als 5,0 gf/$\mu m^2$ hat.

**6.** Verwendung gemäß Anspruch 2, wobei die Oberfläche der Schicht B einen 60°-Spiegelglanz von nicht weniger als 20 % hat.

**7.** Verwendung gemäß Anspruch 1, wobei das inkompatible thermoplastische Harz ein Polystyrolharz ist.

**8.** Verwendung gemäß Anspruch 1, wobei das inkompatible thermoplastische Harz ein Polystyrolharz und ein Polyolefinharz umfasst.

**9.** Verwendung gemäß Anspruch 8, wobei eine Hauptkomponente des Polyolefinharzes ein Polymethylpenten-Harz ist.

**10.** Verwendung gemäß Anspruch 8, wobei die Schmelzviskosität $\eta_0$ einer Hauptkomponente des Polyolefinharzes und die Schmelzviskosität $\eta_s$ des Polystyrolharzes der folgenden Formel (I):

$$\eta_0/\eta_s \leq 0,8 \qquad (I)$$

genügen.

**11.** Verwendung gemäß Anspruch 2, wobei das weiße Pigmentteilchen Titanoxid ist.

**12.** Verwendung gemäß Anspruch 9, wobei der Gehalt an inkompatiblem thermoplastischen Harz den folgenden Formeln (III) und (IV)

$$0.01 \leqq Ps/Po \leqq 1.0 \qquad (III)$$

$$2 \leqq Pt \leqq 15 \qquad (IV)$$

genügt, wobei Po und Ps jeweils der Gehalt (Einheit: Gew.-%) an Polymethylpenten-Harz und Polystyrolharz, bezogen auf die Folie als Ganzes, sind, und Pt der Gehalt (Einheit: Gew.-%) an inkompatiblem thermoplastischen Harz, bezogen auf die Folie als Ganzes, ist.

**13.** Verwendung gemäß Anspruch 1, wobei die Schicht A kein Polyethylenglycol oder ein Derivat desselben umfasst.

**14.** Verwendung gemäß Anspruch 1, wobei der absolute Wert des Unterschiedes des spektralen Remissionsgrades zwischen einer Oberfläche und der anderen Oberfläche der Folie gegenüber einem Licht einer Wellenlänge von 450 nm kleiner als 6,0 % ist.

**15.** Verwendung gemäß Anspruch 1, wobei die Schicht A einen Gehalt an weißen Pigmentteilchen von nicht mehr als 5 Gew.-% hat.

**16.** Verwendung gemäß Anspruch 1, die ein Material in einem Anteil von nicht weniger als 20 Gew.-% umfasst, das von sich aus recyclebar ist.

## Revendications

**1.** Utilisation d'un film de polyester poreux comprenant une fine couche poreuse (couche A) comprenant des vides formés par dispersion, dans une résine de polyester, d'une résine thermoplastique incompatible avec ledit polyester, et par étirage du film 2,8 à 4,0 fois dans la direction longitudinale et 3,2 à 4,2 fois dans la direction traverse, et ayant un rapport du nombre de vides à l'épaisseur de film non inférieur à 0,20 vide/μm, obtenu par division du nombre de vides dans la direction de l'épaisseur de la coupe dans la direction d'orientation du film par l'épaisseur de film, dans laquelle le film a une réflectance spectrale d'une lumière ayant une longueur d'onde de 450 nm non inférieure à 98 % en tant qu'écran réflecteur d'affichage.

**2.** Utilisation selon la revendication 1, comprenant une couche de polyester (couche B) contenant des particules de pigment blanc dans une proportion de 5 à 45 % en poids de la couche, qui est stratifiée sur une ou les deux surfaces de la couche A par coextrusion.

**3.** Utilisation selon la revendication 1 ou la revendication 2, dans laquelle le film a une densité spécifique de tout le film non supérieure à 1,25.

**4.** Utilisation selon la revendication 1 ou la revendication 2, dans laquelle le film a une densité spécifique de tout le film non inférieure à 0,85.

**5.** Utilisation selon la revendication 2, dans laquelle une surface de la couche B a une dureté dynamique non supérieure à 5,0 gf/$\mu m^2$.

**6.** Utilisation selon la revendication 2, dans laquelle la surface de la couche B a un brillant spéculaire non inférieur à 20 %.

**7.** Utilisation selon la revendication 1, dans laquelle la résine thermoplastique incompatible est une résine de polystyrène.

**8.** Utilisation selon la revendication 1, dans laquelle la résine thermoplastique incompatible comprend une résine de polystyrène et une résine de polyoléfine.

**9.** Utilisation selon la revendication 8, dans laquelle un composant principal de la résine de polyoléfine est une résine de polyméthylpentène.

**10.** Utilisation selon la revendication 8, dans laquelle la viscosité à chaud $\eta o$ d'un composant principal de la résine de polyoléfine et la viscosité à chaud $\eta s$ de la résine de polystyrène satisfont à la formule (I) suivante

$$\eta o/\eta s \leq 0,8 \qquad \text{(I)}$$

**11.** Utilisation selon la revendication 2, dans laquelle la particule de pigment blanc est de l'oxyde de titane.

**12.** Utilisation selon la revendication 9, dans laquelle la teneur en résine thermoplastique incompatible satisfait aux formules (III) et (IV) suivantes

$$0,01 \leq Ps/Po \leq 1,0 \qquad \text{(III)}$$

$$2 \leq Pt \leq 1,5 \qquad \text{(IV)}$$

dans laquelle Po et Ps sont chacun la teneur (unité : % en poids) de la résine de polyméthylpentene et de la résine de polystyrène par rapport au film global, et Pt est la teneur (unité : % en poids) de la résine thermoplastique incompatible par rapport au film global.

**13.** Utilisation selon la revendication 1, dans laquelle la couche A ne comprend pas de polyéthylèneglycol, ni de dérivé de celui-ci.

**14.** Utilisation selon la revendication 1, dans laquelle la valeur absolue de la différence de réflectance spectrale entre une surface et l'autre surface du film, d'une lumière ayant une longueur d'onde de 450 nm, est inférieure à 6,0 %.

**15.** Utilisation selon la revendication 1, dans laquelle la couche A a une teneur en particules de pigment blanc non supérieure à 5 % en poids.

**16.** Utilisation selon la revendication 1, qui comprend un matériau auto-recyclable dans une proportion non inférieure à 20 % en poids.

Fig. 1

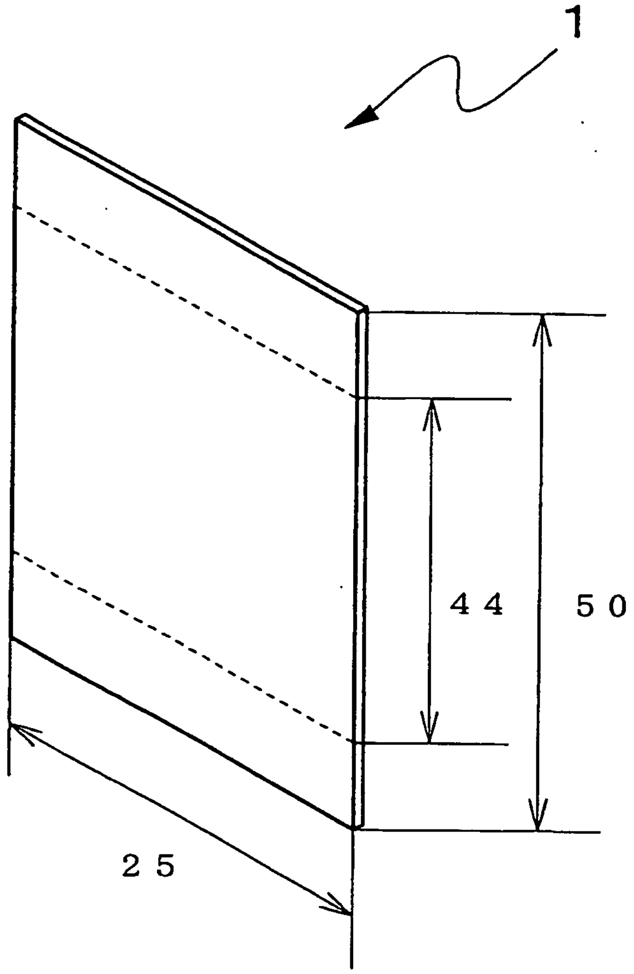

Fig. 2

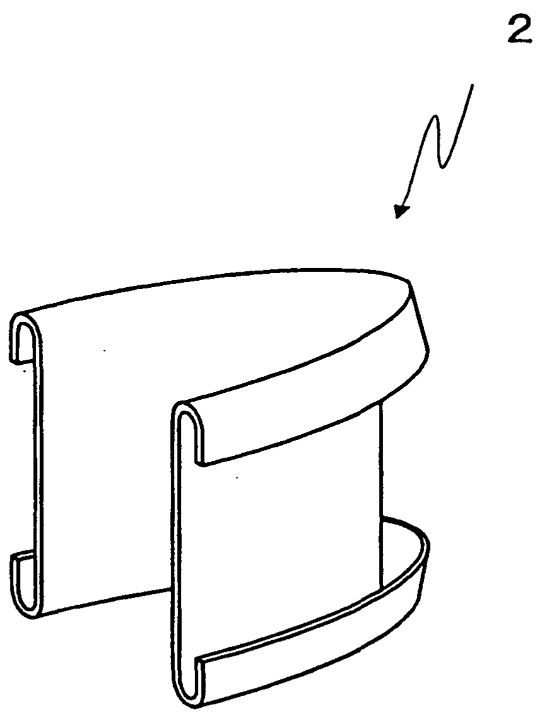

Fig. 3